# EUROPEAN PATENT APPLICATION

(11) **EP 4 106 482 A1**
(43) Date of publication of application: **21.12.2022**
(21) Application number: 20923011.9
(22) Date of filing: 30.10.2020
(51) Int. Cl.: H04W 76/16

(54) **COMMUNICATION METHOD AND APPARATUS**

(30) Priority: 06.03.2020 CN 202010152389
(71) Applicant: Huawei Technologies Co., Ltd., Shenzhen, Guangdong 518129, (CN)
(72) Inventor: YU, Youyang, Shenzhen, Guangdong 518129 (CN)
(74) Representative: Goddar, Heinz J.
(86) International application number: PCT/CN2020/125443
(87) International publication number: WO 2021/174885

(57) **Abstract**

Embodiments of this application provide a communication method and apparatus, and relate to the communication field. In embodiments of this application, a network side may control establishment of a connection, between a terminal device and a UPF network element, allowed to be shared by a plurality of traffic flows, thereby reducing a connection establishment process. The method includes: An SMF network element receives, from a terminal device, a first message used to request to establish or update a PDU session; and the SMF network element sends a second message to the terminal device, where the second message is used to indicate that the PDU session is successfully established or updated, the second message includes a multi-flow connection parameter, and the multi-flow connection parameter is used to indicate that a plurality of traffic flows in the PDU session are transmitted by using a same connection.

## Description

This application claims priority to Chinese Patent Application No. 202010152389.7, filed with the China National Intellectual Property Administration on March 6, 2020 and entitled "COMMUNICATION METHOD AND APPARATUS", which is incorporated herein by reference in its entirety.

### TECHNICAL FIELD

This application relates to communication technologies, and in particular, to a communication method and apparatus.

### BACKGROUND

In a next generation wireless communication system, for example, in a new radio (new radio, NR) system, user equipment (user equipment, UE) establishes a protocol data unit (protocol data unit, PDU) session with a data network (data network, DN) network element through a user plane function (user plane function, UPF) network element. The PDU session provides a data transmission service between a terminal device and the DN network element.

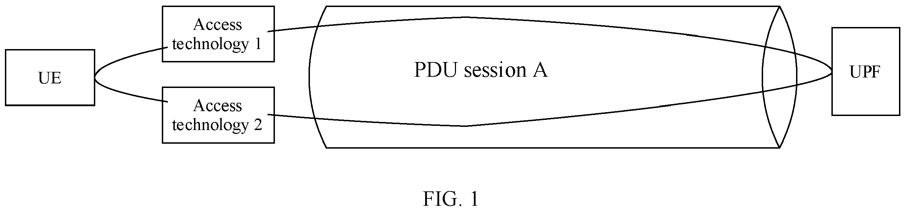

In a conventional technology, establishment of a multi-access PDU session (which may also be referred to as a multi-PDU session) between UE and a UPF network element may be supported. For example, as shown in FIG. 1, a multi-access PDU session A can be established between UE and a UPF network element based on an access technology 1 and an access technology 2. In this case, a traffic flow of the UE may be transmitted to the UPF network element by using the access technology 1 and/or the access technology 2. The multi-access PDU session is relative to a single-access PDU session. The single-access PDU session is a PDU session that accesses the UPF network element by using one access technology, and the multi-access PDU session is a PDU session that accesses the UPF network element by using a plurality of access technologies (at least two access technologies).

However, in the conventional technology, the multi-PDU session can be implemented only after the multi-access PDU session is established between the UE and the UPF network element. In the conventional technology, a manner of implementing the multi-PDU session is complex.

### SUMMARY

Embodiments of this application provide a communication method and apparatus, so that a network side can control establishment of a connection, between a terminal device and a UPF network element, allowed to be shared by a plurality of traffic flows, thereby reducing a connection establishment process and improving transmission efficiency.

According to a first aspect, an embodiment of this application provides a communication method. The method includes: A session management function SMF network element receives a first message from a terminal device, where the first message is used to request to establish or update a protocol data unit PDU session. The SMF network element determines that a plurality of traffic flows in the PDU session share a same connection, where the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection. The SMF network element sends a second message to the terminal device, where the second message is used to indicate that the PDU session is successfully established or updated, the second message includes a multi-flow connection parameter, and the multi-flow connection parameter is used to indicate that the plurality of traffic flows in the PDU session are transmitted by using the same connection.

Usually, when a multi-access PDU session is implemented, the multi-access PDU session needs to be re-established, and a process of implementing the multi-access PDU session is complex. In this embodiment of this application, a network side may control establishment of a connection, between a terminal device and a UPF network element, allowed to be shared by a plurality of traffic flows, thereby reducing a connection establishment process and improving transmission efficiency.

According to a second aspect, an embodiment of this application provides a communication method. The method includes: A session management function SMF network element receives a first message from a terminal device, where the first message is used to request to establish or update a protocol data unit PDU session. The SMF network element determines that a plurality of traffic flows in the PDU session share a same connection, where the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection. The SMF network element sends a second message and a multi-flow connection parameter to the terminal device, where the second message is used to indicate that the PDU session is successfully established or updated, and the multi-flow connection parameter is used to indicate that the plurality of traffic flows in the PDU session are transmitted by using the same connection.

A difference between the embodiment of the second aspect and the embodiment of the first aspect lies in that, in the embodiment of the second aspect, the multi-flow connection parameter is not included in the second message. For beneficial effects of the embodiment of the second aspect, refer to beneficial effects of the embodiment of the first aspect. Details are not described herein again.

For the embodiments of the first aspect and the second aspect of this application, descriptions are provided below.

In a possible implementation, the multi-flow connection parameter includes a traffic flow description parameter and a multi-flow multiplexing parameter, and the multi-flow multiplexing parameter is used to indicate QUIC information, QUIC aggregated stream connection information, MP-QUIC information, MP-QUIC aggregated stream connection information, or SCTP connection information that is related to a traffic flow.

In a possible implementation, the traffic flow description parameter includes at least one of the following: one or more pieces of traffic flow description information, an application identifier, one or more quality of service QoS flow identifiers, or a PDU session identifier.

In a possible implementation, the multi-flow multiplexing parameter includes at least one of the following: QUIC method indication information or MP-QUIC method indication information or SCTP method indication information, a connection identifier, multi-flow multiplexing indication information, QoS flow granularity indication information, or PDU session granularity indication information, where the QUIC method indication information is used to indicate that the traffic flow is transmitted by using the QUIC, the MP-QUIC method indication information is used to indicate that the traffic flow is transmitted by using the MP-QUIC, the SCTP method indication information is used to indicate that the traffic flow is transmitted by using the SCTP connection, the connection identifier is used to indicate a connection identifier corresponding to a traffic flow, the QoS flow granularity indication information is used to indicate that the QUIC, the MP-QUIC, or the SCTP connection is allowed to be shared by a traffic flow in one or more QoS flows, and the PDU session granularity indication information is used to indicate that the QUIC, the MP-QUIC, or the SCTP connection is allowed to be shared by a traffic flow in the PDU session.

In a possible implementation, that the SMF network element determines that a plurality of traffic flows in the PDU session share a same connection includes: The SMF network element determines, based on one or more of the following: traffic flow security or encryption information, a traffic flow QoS parameter, a traffic flow destination address, a traffic flow data network name DNN, a traffic flow transmission protocol, a traffic flow type, and a traffic flow offloading mode, that the traffic flows share the same connection; or the SMF network element determines, based on PCF indication information from a policy control function PCF network element or indication information from the UPF network element, that the traffic flows share the same connection.

In a possible implementation, the SMF network element sends the multi-flow connection parameter to the user plane function UPF network element.

In a possible implementation, that the SMF network element determines that a plurality of traffic flows in the PDU session share a same connection includes: When the plurality of traffic flows in the PDU session have a same encryption and/or integrity protection requirement, the SMF network element determines that the plurality of traffic flows share the same connection; when the plurality of traffic flows in the PDU session have a same encryption security level, the SMF network element determines that the plurality of traffic flows share the same connection; when the plurality of traffic flows in the PDU session belong to a same QoS flow, the SMF network element determines that the plurality of traffic flows share the same connection; when the plurality of traffic flows in the PDU session are non-guaranteed bit rate non-GBR traffic flows, the SMF network element determines that the plurality of traffic flows share the same connection; or when the plurality of traffic flows in the PDU session have a same destination IP address or a same DNN, or the plurality of traffic flows in the PDU session use a same transmission protocol, or the plurality of traffic flows in the PDU session belong to the same PDU session, or the plurality of traffic flows in the PDU session use a same offloading mode, or the plurality of traffic flows in the PDU session have a same type, the SMF network element determines that the plurality of traffic flows share the same connection.

In a possible implementation, the SMF network element sends encryption and/or integrity protection indication information to the UPF network element and/or the terminal device.

According to a third aspect, an embodiment of this application provides a communication method. The method includes: A terminal device sends a first message to a session management function SMF network element, where the first message is used to request to establish or update a protocol data unit PDU session. The terminal device receives a second message from the SMF network element, where the second message is used to indicate that the PDU session is successfully established or updated, the second message includes a multi-flow connection parameter, and the multi-flow connection parameter is used to indicate that a plurality of traffic flows in the PDU session are transmitted by using a same connection; and the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection.

According to a fourth aspect, an embodiment of this application provides a communication method. The method includes: A terminal device sends a first message to a session management function SMF network element, where the first message is used to request to establish or update a protocol data unit PDU session. The terminal device receives a second message and a multi-flow connection parameter from the SMF network element, where the second message is used to indicate that the PDU session is successfully established or updated, and the multi-flow connection parameter is used to indicate that a plurality of traffic flows in the PDU session are transmitted by using a same connection; and the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection.

A difference between the embodiment of the fourth aspect and the embodiment of the third aspect lies in that, in the embodiment of the fourth aspect, the multi-flow connection parameter is not included in the second message. Details are not described herein again.

For the embodiments of the third aspect and the fourth aspect of this application, descriptions are provided below.

For specific content of the multi-flow connection parameter, the traffic flow description parameter, and the multi-flow multiplexing parameter in the third aspect and the fourth aspect, refer to specific content in the first aspect. Details are not described herein again.

In a possible implementation, the method further includes: The terminal device establishes the connection shared by a plurality of traffic flows of a user plane function UPF network element. The terminal device transmits a first traffic flow by using the connection shared by the plurality of traffic flows.

In a possible implementation, the terminal device determines, based on the multi-flow multiplexing parameter, whether a second traffic flow is allowed to share the connection for transmitting the first traffic flow. When the second traffic flow is allowed to share the connection for transmitting the first traffic flow, the terminal device transmits the second traffic flow by using the connection for transmitting the first traffic flow.

In a possible implementation, the terminal device receives encryption and/or integrity protection indication information from the SMF network element; and the terminal device performs encryption and/or integrity protection on the traffic flow or skips performing encryption and/or integrity protection on the traffic flow based on the encryption and/or integrity protection indication information.

According to a fifth aspect, an embodiment of this application provides a communication method. The method includes: A user plane function UPF network element receives a multi-flow connection parameter from a session management function SMF network element, where the multi-flow connection parameter is used to indicate that a plurality of traffic flows in a PDU session are transmitted by using a same connection. The UPF network element establishes, based on the multi-flow connection parameter, the connection that is allowed to be shared by the plurality of traffic flows to a terminal device, where the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection.

For specific content of the multi-flow connection parameter, the traffic flow description parameter, and the multi-flow multiplexing parameter in the fifth aspect, refer to specific content in the first aspect. Details are not described herein again.

In a possible implementation, the UPF network element transmits a first traffic flow by using the connection that is allowed to be shared by the plurality of traffic flows. The UPF network element determines, based on the multi-flow multiplexing parameter, whether a second traffic flow is allowed to share the connection for transmitting the first traffic flow. When the second traffic flow is allowed to share the connection for transmitting the first traffic flow, the UPF network element transmits the second traffic flow by using the connection for transmitting the first traffic flow.

In a possible implementation, the UPF network element receives encryption and/or integrity protection indication information from the SMF network element; and the UPF network element performs encryption and/or integrity protection on the traffic flow or skips performing encryption and/or integrity protection on the traffic flow based on the encryption and/or integrity protection indication information.

According to a sixth aspect, an embodiment of this application provides a communication apparatus. The communication apparatus may be an SMF network element, or may be a chip or a chip system in the SMF network element. The communication apparatus may include a processing unit and a communication unit. When the communication apparatus is the SMF network element, the processing unit may be a processor, and the communication unit may be a communication interface or an interface circuit. The communication apparatus may further include a storage unit, and the storage unit may be a memory. The storage unit is configured to store instructions, and the processing unit executes the instructions stored in the storage unit, so that the SMF network element implements the communication method described in any one of the first aspect or the possible implementations of the first aspect, or the SMF network element implements the communication method described in any one of the second aspect or the possible implementations of the second aspect.

For example, the communication unit is configured to receive a first message from a terminal device, where the first message is used to request to establish or update a protocol data unit PDU session. The processing unit is configured to determine that a plurality of traffic flows in the PDU session share a same connection, where the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection. The communication unit is further configured to send a second message to the terminal device, where the second message is used to indicate that the PDU session is successfully established or updated, the second message includes a multi-flow connection parameter, and the multi-flow connection parameter is used to indicate that the plurality of traffic flows in the PDU session are transmitted by using the same connection.

Alternatively, for example, the communication unit is configured to receive a first message from a terminal device, where the first message is used to request to establish or update a protocol data unit PDU session. The processing unit is configured to determine that a plurality of traffic flows in the PDU session share a same connection, where the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection. The communication unit is further configured to send a second message and a multi-flow connection parameter to the terminal device, where the second message is used to indicate that the PDU session is successfully established or updated, and the multi-flow connection parameter is used to indicate that the plurality of traffic flows in the PDU session are transmitted by using the same connection.

For specific content of the multi-flow connection parameter, the traffic flow description parameter, and the multi-flow multiplexing parameter in the sixth aspect, refer to specific content in the first aspect. Details are not described herein again.

In a possible implementation, the processing unit is specifically configured to determine, based on one or more of the following: traffic flow security or encryption information, a traffic flow QoS parameter, a traffic flow destination address, a traffic flow data network name DNN, a traffic flow transmission protocol, a traffic flow type, and a traffic flow offloading mode, that the traffic flows share the same connection; or the processing unit is specifically configured to determine, based on PCF indication information from a policy control function PCF network element or indication information from the UPF network element, that the traffic flows share the same connection.

In a possible implementation, the communication unit is further configured to send the multi-flow connection parameter to the user plane function UPF network element.

In a possible implementation, the processing unit is specifically configured to: when the plurality of traffic flows in the PDU session have a same encryption and/or integrity protection requirement, determine that the plurality of traffic flows share the same connection; when the plurality of traffic flows in the PDU session have a same encryption security level, determine that the plurality of traffic flows share the same connection; when the plurality of traffic flows in the PDU session belong to a same QoS flow, determine that the plurality of traffic flows share the same connection; when the plurality of traffic flows in the PDU session are non-guaranteed bit rate non-GBR traffic flows, determine that the plurality of traffic flows share the same connection; or when the plurality of traffic flows in the PDU session have a same destination IP address or a same DNN, or the plurality of traffic flows in the PDU session use a same transmission protocol, or the plurality of traffic flows in the PDU session belong to the same PDU session, or the plurality of traffic flows in the PDU session use a same offloading mode, or the plurality of traffic flows in the PDU session have a same type, determine that the plurality of traffic flows share the same connection.

In a possible implementation, the communication unit is further configured to send encryption and/or integrity protection indication information to the UPF network element and/or the terminal device.

When the communication apparatus is the chip or the chip system in the SMF network element, the processing unit may be a processor, and the communication unit may be a communication interface. For example, the communication interface may be an input/output interface, a pin, or a circuit. The processing unit executes instructions stored in a storage unit, so that the SMF network element implements the communication method described in any one of the first aspect or the possible implementations of the first aspect, or the SMF network element implements the communication method described in any one of the second aspect or the possible implementations of the second aspect. The storage unit may be a storage unit (for example, a register or a cache) in the chip, or may be a storage unit (for example, a read-only memory or a random access memory) that is in the SMF network element and that is outside the chip.

According to a seventh aspect, an embodiment of this application provides a communication apparatus. The communication apparatus may be a terminal device, or may be a chip or a chip system in the terminal device. The communication apparatus may include a processing unit and a communication unit. When the communication apparatus is the terminal device, the processing unit may be a processor, and the communication unit may be a communication interface, an interface circuit, or a transceiver. The communication apparatus may further include a storage unit, and the storage unit may be a memory. The storage unit is configured to store instructions, and the processing unit executes the instructions stored in the storage unit, so that the terminal device implements the communication method described in any one of the third aspect or the possible implementations of the third aspect, or the terminal device implements the communication method described in any one of the fourth aspect or the possible implementations of the fourth aspect.

For example, the communication unit is configured to send a first message to a session management function SMF network element, where the first message is used to request to establish or update a protocol data unit PDU session. The communication unit is further configured to receive a second message from the SMF network element, where the second message is used to indicate that the PDU session is successfully established or updated, the second message includes a multi-flow connection parameter, and the multi-flow connection parameter is used to indicate that a plurality of traffic flows in the PDU session are transmitted by using a same connection; and the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection.

Alternatively, for example, the communication unit is configured to send a first message to a session management function SMF network element, where the first message is used to request to establish or update a protocol data unit PDU session. The communication unit is further configured to receive a second message and a multi-flow connection parameter from the SMF network element, where the second message is used to indicate that the PDU session is successfully established or updated, and the multi-flow connection parameter is used to indicate that a plurality of traffic flows in the PDU session are transmitted by using a same connection; and the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection.

For specific content of the multi-flow connection parameter, the traffic flow description parameter, and the multi-flow multiplexing parameter in the seventh aspect, refer to specific content in the first aspect. Details are not described herein again.

In a possible implementation, the apparatus further includes the processing unit. The processing unit is configured to establish the connection shared by a plurality of traffic flows of a user plane function UPF network element; and the processing unit is further configured to transmit a first traffic flow by using the connection shared by the plurality of traffic flows.

In a possible implementation, the processing unit is further configured to determine, based on the multi-flow multiplexing parameter, whether a second traffic flow is allowed to share the connection for transmitting the first traffic flow; and the processing unit is further configured to: when the second traffic flow is allowed to share the connection for transmitting the first traffic flow, transmit the second traffic flow by using the connection for transmitting the first traffic flow.

In a possible implementation, the communication unit is further configured to receive encryption and/or integrity protection indication information from the SMF network element; and the processing unit is further configured to perform encryption and/or integrity protection on the traffic flow or skip performing encryption and/or integrity protection on the traffic flow based on the encryption and/or integrity protection indication information.

When the communication apparatus is the chip in the terminal device, the processing unit may be a processor, and the communication unit may be a communication interface, for example, an input/output interface, a pin, or a circuit. The processing unit executes instructions stored in a storage unit, so that the terminal device implements the communication method described in any one of the third aspect or the possible implementations of the third aspect, or the terminal device implements the communication method described in any one of the fourth aspect or the possible implementations of the fourth aspect. The storage unit may be a storage unit (for example, a register or a cache) in the chip, or may be a storage unit (for example, a read-only memory or a random access memory) that is in the terminal device and that is outside the chip.

According to an eighth aspect, an embodiment of this application provides a communication apparatus. The communication apparatus may be a UPF network element, or may be a chip or a chip system in the UPF network element. The communication apparatus may include a processing unit and a communication unit. When the communication apparatus is the UPF network element, the processing unit may be a processor, and the communication unit may be a communication interface or an interface circuit. The communication apparatus may further include a storage unit, and the storage unit may be a memory. The storage unit is configured to store instructions, and the processing unit executes the instructions stored in the storage unit, so that the UPF network element implements the communication method described in any one of the fifth aspect or the possible implementations of the fifth aspect.

For example, the communication unit is configured to receive a multi-flow connection parameter from a session management function SMF network element, where the multi-flow connection parameter is used to indicate that a plurality of traffic flows in a PDU session are transmitted by using a same connection. The processing unit is configured to establish, based on the multi-flow connection parameter, the connection that is allowed to be shared by the plurality of traffic flows to a terminal device, where the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection.

For specific content of the multi-flow connection parameter, the traffic flow description parameter, and the multi-flow multiplexing parameter in the eighth aspect, refer to specific content in the first aspect. Details are not described herein again.

In a possible implementation, the processing unit is further configured to transmit a first traffic flow by using the connection that is allowed to be shared by the plurality of traffic flows; the processing unit is further configured to determine, based on the multi-flow multiplexing parameter, whether a second traffic flow is allowed to share the connection for transmitting the first traffic flow; and the processing unit is further configured to: when the second traffic flow is allowed to share the connection for transmitting the first traffic flow, transmit the second traffic flow by using the connection for transmitting the first traffic flow.

In a possible implementation, the communication unit is further configured to receive encryption and/or integrity protection indication information from the SMF network element; and the processing unit is further configured to perform encryption and/or integrity protection on the traffic flow or skip performing encryption and/or integrity protection on the traffic flow based on the encryption and/or integrity protection indication information.

When the communication apparatus is the chip or the chip system in the UPF network element, the processing unit may be a processor, and the communication unit may be a communication interface. For example, the communication interface may be an input/output interface, a pin, or a circuit. The processing unit executes instructions stored in a storage unit, so that the UPF network element implements the communication method described in any one of the fifth aspect or the possible implementations of the fifth aspect. The storage unit may be a storage unit (for example, a register or a cache) in the chip, or may be a storage unit (for example, a read-only memory or a random access memory) that is in the UPF network element and that is outside the chip.

According to a ninth aspect, an embodiment of this application provides a computer-readable storage medium. The computer-readable storage medium stores a computer program or instructions. When the computer program or the instructions is or are run on a computer, the computer is enabled to perform the communication method described in any one of the first aspect or the possible implementations of the first aspect.

According to a tenth aspect, an embodiment of this application provides a computer-readable storage medium. The computer-readable storage medium stores a computer program or instructions. When the computer program or the instructions is or are run on a computer, the computer is enabled to perform the communication method described in any one of the second aspect or the possible implementations of the second aspect.

According to an eleventh aspect, an embodiment of this application provides a computer-readable storage medium. The computer-readable storage medium stores a computer program or instructions. When the computer program or the instructions is or are run on a computer, the computer is enabled to perform the communication method described in any one of the third aspect or the possible implementations of the third aspect.

According to a twelfth aspect, an embodiment of this application provides a computer-readable storage medium. The computer-readable storage medium stores a computer program or instructions. When the computer program or the instructions is or are run on a computer, the computer is enabled to perform the communication method described in any one of the fourth aspect or the possible implementations of the fourth aspect.

According to a thirteenth aspect, an embodiment of this application provides a computer-readable storage medium. The computer-readable storage medium stores a computer program or instructions. When the computer program or the instructions is or are run on a computer, the computer is enabled to perform the communication method described in any one of the fifth aspect or the possible implementations of the fifth aspect.

According to a fourteenth aspect, an embodiment of this application provides a computer program product including instructions. When the instructions are run on a computer, the computer is enabled to perform the communication method described in any one of the first aspect or the possible implementations of the first aspect.

According to a fifteenth aspect, an embodiment of this application provides a computer program product including instructions. When the instructions are run on a computer, the computer is enabled to perform the communication method described in any one of the second aspect or the possible implementations of the second aspect.

According to a sixteenth aspect, an embodiment of this application provides a computer program product including instructions. When the instructions are run on a computer, the computer is enabled to perform the communication method described in any one of the third aspect or the possible implementations of the third aspect.

According to a seventeenth aspect, this application provides a computer program product including instructions. When the instructions are run on a computer, the computer is enabled to perform the communication method described in any one of the fourth aspect or the possible implementations of the fourth aspect.

According to an eighteenth aspect, an embodiment of this application provides a computer program product including instructions. When the instructions are run on a computer, the computer is enabled to perform the communication method described in any one of the fifth aspect or the possible implementations of the fifth aspect.

According to a nineteenth aspect, an embodiment of this application provides a communication system. The communication system includes any one or both of the following: the SMF network element described in the sixth aspect and the possible implementations of the sixth aspect and the UPF network element described in the eighth aspect and the possible implementations of the eighth aspect.

In a possible implementation, the communication system may further include the terminal device described in the seventh aspect and the possible implementations of the seventh aspect.

According to a twentieth aspect, an embodiment of this application provides a communication apparatus. The communication apparatus includes a processor and a storage medium. The storage medium stores instructions; and when the instructions are run by the processor, the communication method described in any one of the first aspect or the possible implementations of the first aspect is implemented.

According to a twenty-first aspect, an embodiment of this application provides a communication apparatus. The communication apparatus includes a processor and a storage medium. The storage medium stores instructions; and when the instructions are run by the processor, the communication method described in any one of the second aspect or the possible implementations of the second aspect is implemented.

According to a twenty-second aspect, an embodiment of this application provides a communication apparatus. The communication apparatus includes a processor and a storage medium. The storage medium stores instructions; and when the instructions are run by the processor, the communication method described in any one of the third aspect or the possible implementations of the third aspect is implemented.

According to a twenty-third aspect, an embodiment of this application provides a communication apparatus. The communication apparatus includes a processor and a storage medium. The storage medium stores instructions; and when the instructions are run by the processor, the communication method described in any one of the fourth aspect or the possible implementations of the fourth aspect is implemented.

According to a twenty-fourth aspect, an embodiment of this application provides a communication apparatus. The communication apparatus includes a processor and a storage medium. The storage medium stores instructions; and when the instructions are run by the processor, the communication method described in any one of the fifth aspect or the possible implementations of the fifth aspect is implemented.

According to a twenty-fifth aspect, this application provides a chip or a chip system. The chip or the chip system includes at least one processor and a communication interface. The communication interface and the at least one processor are interconnected through a line. The at least one processor is configured to run a computer program or instructions, to perform the communication method described in any one of the first aspect or the possible implementations of the first aspect.

According to a twenty-sixth aspect, this application provides a chip or a chip system. The chip or the chip system includes at least one processor and a communication interface. The communication interface and the at least one processor are interconnected through a line. The at least one processor is configured to run a computer program or instructions, to perform the communication method described in any one of the second aspect or the possible implementations of the second aspect.

According to a twenty-seventh aspect, this application provides a chip or a chip system. The chip or the chip system includes at least one processor and a communication interface. The communication interface and the at least one processor are interconnected through a line. The at least one processor is configured to run a computer program or instructions, to perform the communication method described in any one of the third aspect or the possible implementations of the third aspect.

According to a twenty-eighth aspect, this application provides a chip or a chip system. The chip or the chip system includes at least one processor and a communication interface. The communication interface and the at least one processor are interconnected through a line. The at least one processor is configured to run a computer program or instructions, to perform the communication method described in any one of the fourth aspect or the possible implementations of the fourth aspect.

According to a twenty-ninth aspect, this application provides a chip or a chip system. The chip or the chip system includes at least one processor and a communication interface. The communication interface and the at least one processor are interconnected through a line. The at least one processor is configured to run a computer program or instructions, to perform the communication method described in any one of the fifth aspect or the possible implementations of the fifth aspect.

The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

It should be understood that the second aspect to the twenty-ninth aspect in embodiments of this application correspond to the technical solutions of the first aspect in embodiments of this application, and beneficial effects achieved in the aspects and feasible implementations corresponding to the aspects are similar. Details are not described again.

### BRIEF DESCRIPTION OF DRAWINGS

FIG. 1 is a schematic diagram of existing multi-PDU session access;
FIG. 2 is a schematic diagram of a network architecture according to an embodiment of this application;
FIG. 3 is another schematic diagram of a network architecture according to an embodiment of this application;
FIG. 4 is a schematic flowchart of a communication method according to an embodiment of this application;
FIG. 5 is a first schematic diagram of a structure of a communication apparatus according to an embodiment of this application;
FIG. 6 is a schematic diagram of a structure of a communication device according to an embodiment of this application;
FIG. 7 is a schematic diagram of a structure of a terminal device according to an embodiment of this application; and
FIG. 8 is a schematic diagram of a structure of a chip according to an embodiment of this application.

### DESCRIPTION OF EMBODIMENTS

To clearly describe the technical solutions in embodiments of this application, terms such as "first" and "second" are used in embodiments of this application to distinguish between same items or similar items that provide basically same functions or purposes. For example, a first network and a second network are merely intended to distinguish between different networks, and are not intended to limit a sequence thereof. A person skilled in the art may understand that the terms such as "first" and "second" do not limit a quantity or an execution sequence, and the terms such as "first" and "second" do not indicate a definite difference.

It should be noted that, in this application, words such as "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word "example" or "for example" or the like is intended to present a relative concept in a specific manner.

In this application, the term "at least one" means one or more, and the term "a plurality of' means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Embodiments of this application provide a communication method. The method in embodiments of this application may be applied to a 5th generation (5th generation, 5G) mobile communication system, or may be applied to long term evolution (long term evolution, LTE). The 5G system is also referred to as a new wireless communication system, a new radio (new radio, NR), or a next generation mobile communication system.

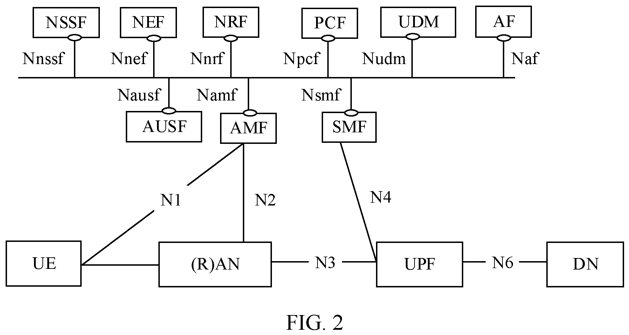

For example, FIG. 2 is a schematic diagram of a network architecture according to an embodiment of this application. The architecture supports access to a core network (core network, CN) by using a wireless technology (for example, LTE or a 5G radio access network (radio access network, RAN)) that is defined by the 3rd generation partnership project (3rd generation partnership project, 3GPP) standard group, and supports access to the core network by using a non-3GPP access technology through a non-3GPP interworking function (non-3GPP interworking function, N3IWF) or a next generation access gateway (next generation packet data gateway, ngPDG).

The network architecture includes a terminal device, an access network (access network, AN), a core network, and a data network (data network, DN). An access network apparatus is mainly configured to implement functions such as a radio physical layer function, resource scheduling, radio resource management, radio access control, and mobility management. A core network device may include a management device and a gateway device. The management device is mainly used for device registration, security authentication, mobility management, location management, and the like of the terminal device. The gateway device is mainly configured to establish a channel with the terminal device, and forward a data packet between the terminal device and an external data network on the channel. The data network may include a network device (for example, a device such as a server or a router), and the data network is mainly used to provide a plurality of data services for the terminal device. For example, an access network, a core network, and a data network in 5G are used as examples for description.

The access network in 5G may be a radio access network (radio access network, (R)AN). A (R)AN device in the 5G system may include a plurality of 5G-(R)AN nodes. The 5G-(R)AN node may include an access point (access point, AP) in a 3GPP access network or a non-3GPP access network such as a Wi-Fi network, a next generation base station (which may be collectively referred to as a next generation radio access network node (NG-RAN node), where the next generation base station includes a new radio NodeB (NR NodeB, gNB), a next generation evolved NodeB (NG-eNB), a central unit (central unit, CU), and a distributed unit (distributed unit, DU), a gNB in a separated form, and the like), a transmission reception point (transmission receive point, TRP), a transmission point (transmission point, TP), or another node.

The 5G core network (5G core/new generation core, 5GC/NGC) includes a plurality of functional units such as an access and mobility management function (access and mobility management function, AMF) network element, a session management function (session management function, SMF) network element, a user plane function (user plane function, UPF) network element, an authentication server function (authentication server function, AUSF) network element, a policy control function (policy control function, PCF) network element, an application function (application function, AF) network element, a unified data management (unified data management, UDM) function network element, a network slice selection function (network slice selection function, NSSF) network element, and a network exposure function (network element function, NEF) network element.

The AMF network element is mainly responsible for services such as mobility management and access management. The SMF network element is mainly responsible for session management, a dynamic host configuration protocol function, user plane function selection and control, and the like. The UPF network element is mainly responsible for functions related to external connection to a data network (data network, DN), user plane data packet routing and forwarding, packet filtering, quality of service (quality of service, QoS) control, and the like. The DN mainly provides a service for user equipment, for example, provides a mobile operator service, an internet service, or a third-party service. The AUSF network element is mainly responsible for a function of authenticating the terminal device. The PCF network element is mainly responsible for providing a unified policy framework for network behavior management, providing a policy rule for a control plane function, obtaining registration information related to policy decision, and the like. It should be noted that these functional units may independently work, or may be combined to implement some control functions, such as access control and mobility management functions such as access authentication, security encryption, and location registration of the terminal device, and session management functions such as establishment, release, and change of a user plane transmission path. The UDM network element is used for unified user data management, and is mainly configured to store user equipment subscription data.

Functional units in the 5G system may communicate with each other through a next generation (next generation, NG) network interface. For example, the terminal device may transmit a control plane message with the AMF network element through an NG interface 1 (N1 for short). The RAN device may establish a user plane communication connection to the UPF through an NG interface 3 (N3 for short). The AN/RAN device may establish a control plane signaling connection to the AMF network element through an NG interface 2 (N2 for short). The UPF may exchange information with the SMF network element through an NG interface 4 (N4 for short). The UPF may exchange user plane data with the data network DN through an NG interface 6 (N6 for short). The AMF network element may exchange information with the SMF network element through an NG interface 11 (N11 for short). The SMF network element may exchange information with the PCF network element through an NG interface 7 (N7 for short). The AMF network element may exchange information with the AUSF through an NG interface 12 (N12 for short).

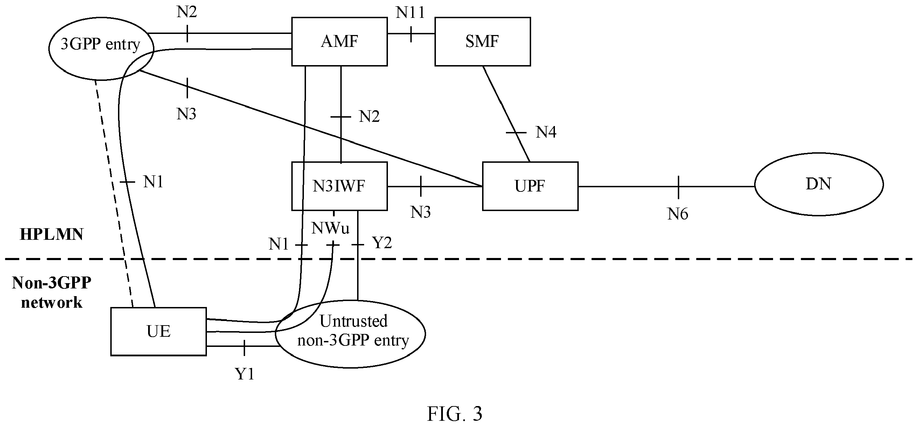

For example, FIG. 3 is a schematic diagram of a specific network architecture when a core network supports untrusted non-3GPP access (untrusted non-3GPP access). A network architecture in a home public land mobile network (home public land mobile network, HPLMN) is similar to the implementation in FIG. 2, and details are not described herein again. The untrusted non-3GPP access may be untrusted wireless local area network (wireless local area network, WLAN) access. In this architecture, the terminal device may further exchange information with the AMF by using the untrusted non-3GPP access, the non-3GPP interworking function (Non-3GPP interworking function, N3IWF), or a non-3GPP access gateway, and an N3IWF network element may exchange information with the UPF through the N3.

In addition, the core network may further support trusted non-3GPP access and/or fixed network access. A trusted non-3GPP network includes a trusted WLAN network, and a fixed network includes fixed home network access and the like. A network side architecture is similar to an untrusted non-3GPP network architecture. The N3IWF and an untrusted access network are replaced with a trusted non-3GPP access network, or the N3IWF is replaced with a trusted non-3GPP access gateway, and the untrusted access network is replaced with a trusted access network. An access network device between the terminal device and the trusted non-3GPP access gateway may include a WLAN AP, a fixed access network (fixed Access network, FAN) device, a switch, a router, and the like.

Regardless of the trusted non-3GPP access or the untrusted non-3GPP access, a point-to-point interface protocol shown in FIG. 2 may be used on a core network side, or a service-based interface architecture consistent with a 3GPP access core network architecture is used. This is not specifically limited in embodiments of this application.

In a possible implementation, the 3GPP access technology and the non-3GPP access technology may include a plurality of access standards or frequency bands, and may be simultaneously used. For example, 3 GPP access includes simultaneous access to the 5GC by using two access technologies: LTE in 4G and NG-RAN in 5G. Non-3GPP Wi-Fi access also includes simultaneous access of two frequency bands. For example, a 5 GHz Wi-Fi frequency band and a 2.4 GHz Wi-Fi frequency band are simultaneously used to access the 5GC. In a possible implementation, UE may simultaneously access the 5GC architecture in at least two of the foregoing four access manners (where this includes that the four access manners are simultaneously used).

The method processing in embodiments of this application may be applied to the foregoing 5G 3GPP access architecture, a non-3GPP access architecture, or an architecture in which 3GPP access and non-3GPP access are simultaneously performed, or may be applied to an architecture in which 5G cellular (NG-RAN) access and 4G cellular (LTE) access are simultaneously performed, and so on. A network architecture is not specifically limited in embodiments of this application.

The following describes some terms in embodiments of this application.

Data transmission in embodiments of this application may include a data sending process, a data receiving process, or a data exchange process. For example, data transmission performed between the terminal device and the UPF network element may include: The terminal device sends data to the UPF network element, or the UPF network element sends data to the terminal device, or the terminal device sends data to the UPF network element and receives data from the UPF, or the UPF network element sends data to the terminal device and receives data from the UPF network element.

A connection (which may also be referred to as a traffic flow multiplexing connection or the like) that is allowed to be shared by a plurality of traffic flows in embodiments of this application may be a user datagram protocol (quick UDP internet connection, QUIC), an aggregated stream connection in a QUIC (where an aggregated stream may be referred to as a stream), a multi-path internet transmission protocol (multi-path quick UDP internet connection, MP-QUIC) connection, an aggregated stream connection in an MP-QUIC, a stream control transmission protocol (stream control transmission protocol, SCTP) connection, or the like. The connection that is allowed to be shared by the plurality of traffic flows is not specifically limited in embodiments of this application.

The QUIC is a UDP-based low-delay internet transport layer protocol. When a transmit end needs to transmit data by using the QUIC, the transmit end needs to first establish the QUIC to a receive end, and then transmit the to-be-transmitted data based on the QUIC or the aggregated stream connection in the QUIC. The QUIC or the aggregated stream connection in the QUIC may support one or more access technologies or tunnels.

The QUIC in embodiments of this application may be multiplexed by a plurality of traffic flows. For example, if one QUIC can be shared by different traffic flows in all PDU sessions of the terminal device, the QUIC may be considered as a QUIC at a terminal device granularity. If one QUIC can be shared by one or more PDU sessions, the QUIC may be considered as a QUIC at a PDU session granularity. If one QUIC can be shared by all traffic flows in one or more quality of service flows (Quality of Service flows, QoS flows) of a same PDU session, the QUIC may be a connection at a QoS flow granularity. If one QUIC can be used by only one traffic flow, the QUIC may be a QUIC at a flow granularity.

The aggregated stream connection in the QUIC in embodiments of this application may be multiplexed by a plurality of traffic flows. For example, if an aggregated stream connection in one QUIC can be shared by different traffic flows in all PDU sessions of the terminal device, the aggregated stream connection in the QUIC may be considered as an aggregated stream connection in a QUIC at a terminal device granularity. If an aggregated stream connection in one QUIC can be shared by one or more PDU sessions, the aggregated stream connection in the QUIC may be considered as an aggregated stream connection in a QUIC at a PDU session granularity. If an aggregated stream connection in one QUIC can be shared by all traffic flows in one or more QoS flows of a same PDU session, the aggregated stream connection in the QUIC may be a connection at a QoS flow granularity. If an aggregated stream connection in one QUIC can be used by only one traffic flow, the aggregated stream connection in the QUIC may be an aggregated stream connection in a QUIC at a flow granularity.

The MP-QUIC is a UDP-based low-delay multi-path internet transport layer protocol. When a transmit end needs to transmit data by using the MP-QUIC, the transmit end needs to first establish the MP-QUIC to a receive end, and then transmits the to-be-transmitted data based on the MP-QUIC or the aggregated stream connection in the MP-QUIC.

Each parameter in the QUIC-related connection may be used for the MP-QUIC-related connection. A difference between the MP-QUIC-related connection and the QUIC-related connection lies in that the MP-QUIC-related connection may include a plurality of sub-connections, the sub-connections may correspond to sub-connection identifiers, and the sub-connections may support or correspond to different access technologies or tunnels.

The MP-QUIC in embodiments of this application may be multiplexed by a plurality of traffic flows. For example, if one MP-QUIC can be shared by different traffic flows in all PDU sessions of the terminal device, the MP-QUIC may be considered as an MP-QUIC at a terminal device granularity. If one MP-QUIC can be shared by one or more PDU sessions, the MP-QUIC may be considered as an MP-QUIC at a PDU session granularity. If one MP-QUIC can be shared by all traffic flows in one or more QoS flows of a same PDU session, the MP-QUIC may be a connection at a QoS flow granularity. If one MP-QUIC can be used by only one traffic flow, the MP-QUIC may be an MP-QUIC at a flow granularity.

The aggregated stream connection in the MP-QUIC in embodiments of this application may be multiplexed by a plurality of traffic flows. For example, if an aggregated stream connection in one MP-QUIC can be shared by different traffic flows in all PDU sessions of the terminal device, the aggregated stream connection in the MP-QUIC may be considered as an aggregated stream connection in an MP-QUIC at a terminal device granularity. If an aggregated stream connection in one MP-QUIC can be shared by one or more PDU sessions, the aggregated stream connection in the MP-QUIC may be considered as an aggregated stream connection in an MP-QUIC at a PDU session granularity. If an aggregated stream connection in one MP-QUIC can be shared by all traffic flows in one or more QoS flows of a same PDU session, the aggregated stream connection in the MP-QUIC may be a connection at a QoS flow granularity. If an aggregated stream connection in one MP-QUIC can be used by only one traffic flow, the aggregated stream connection in the MP-QUIC may be an aggregated stream connection in an MP-QUIC at a flow granularity.

The SCTP is a connection-oriented stream transmission protocol and can provide stable and ordered data transmission between two endpoints. When a transmit end needs to transmit data by using the SCTP connection, the transmit end first needs to establish the SCTP connection to a receive end, and then processes the to-be-transmitted data. The SCTP connection can be shared by a plurality of traffic flows.

The traffic flow in embodiments of this application may be a traffic flow using a user datagram protocol (user datagram protocol, UDP) or another protocol. For example, the traffic flow in the PDU session may be a PDU session established between the terminal device and a 5G core network (5G core, 5GC) or a UDP traffic flow in the session, or a PDN connection established between the terminal device and an EPC network or a UDP traffic flow in the PDN connection, or an IP connection for which the terminal device performs non-seamless offloading (non-seamless WLAN offload) by using a non-3GPP access network (for example, WLAN access) or a UDP traffic flow in the connection.

In embodiments of this application, the terminal device may support a QUIC capability, an MP-QUIC capability, or an SCTP capability. If the terminal device supports the QUIC capability, the terminal device may subsequently establish the QUIC or the aggregated stream connection in the QUIC by using a QUIC protocol. If the terminal device supports the MP-QUIC capability, the terminal device may subsequently establish the MP-QUIC or the aggregated stream connection in the MP-QUIC by using an MP-QUIC protocol. If the terminal device supports the SCTP capability, the terminal device may subsequently establish the SCTP connection by using an SCTP protocol.

A multi-flow connection parameter in embodiments of this application may be used to indicate that a connection between the terminal device and the UPF network element can be shared by a plurality of traffic flows. For example, the multi-flow connection parameter may be used to indicate that a connection between the terminal device and the UPF network element is allowed to be shared by different traffic flows in all PDU sessions of the terminal device, or may be used to indicate that a connection between the terminal device and the UPF network element is allowed to be shared by a plurality of PDU sessions, or may be used to indicate that a connection between the terminal device and the UPF network element is allowed to be shared by a plurality of traffic flows in one PDU session, or may be used to indicate that a connection between the terminal device and the UPF network element is allowed to be shared by all traffic flows in one or more QoS flows, and so on.

For example, the multi-flow connection parameter may include one or both of a traffic flow description parameter or a multi-flow multiplexing parameter.

In a possible implementation, the traffic flow description parameter may include one or more of the following: one or more pieces of traffic flow description information, an application identifier, one or more QoS flow identifiers (QoS flow IDs, QFIs), one or more PDU session identifiers, and a terminal device identifier.

The traffic flow description information may be at least one piece of traffic flow internet protocol (internet protocol, IP) 5-tuple description information, where the 5-tuple description information may be a source IP address, a destination IP address, a source port number, a destination port number, and a protocol type; or the traffic flow description information may be a PDU session identifier (when all traffic flows in the PDU session are transmitted by using a connection); or the traffic flow description information may be at least one piece of ethernet (ethernet) packet header information, for example, a source media access control (media access control, MAC) address and a destination MAC address, or a virtual local area network (virtual local area network, VLAN) identifier; and so on. Subsequently, the terminal device may perform transmission by using a same connection shared by the traffic flows including the traffic flow description information. There may be one or more pieces of traffic flow description information. This is not specifically limited in embodiments of this application.

The application identifier may be used to identify a traffic flow of a specific application program. Subsequently, the terminal device may perform transmission by using a same connection shared by the traffic flows including the application identifier. There may be one or more application identifiers. This is not specifically limited in embodiments of this application.

The QoS flow identifier (QFI) may be an identifier of a plurality of traffic flows whose QoS meets a specific relationship. Subsequently, the terminal device may perform transmission by using a same connection shared by the plurality of traffic flows including the QoS flow identifier. For example, the traffic flow description parameter includes a QFI 1 and a QFI 2. This indicates that a traffic flow in the QFI 1 and a traffic flow in the QFI 2 can share a same connection for data transmission.

The PDU session identifier may be an identifier of an established or updated PDU session. Subsequently, the terminal device may perform transmission by using a same connection shared by the plurality of traffic flows including the PDU session identifier. In a possible implementation, if the traffic flow description parameter is transmitted between the terminal device and the UPF network element, the traffic flow description parameter may include one or more N4 session identifiers or PDU session identifiers. This indicates that a plurality of traffic flows corresponding to the N4 session identifiers or the PDU session identifiers are transmitted by using a same connection, and there may be a one-to-one correspondence between the N4 session identifier and the PDU session identifier.

The terminal device identifier may be a symbol, a digit, or the like used to identify the terminal device, for example, may be an IP address or an ID of the terminal device. This is not specifically limited in embodiments of this application. Subsequently, the plurality of traffic flows including the terminal device identifier can be transmitted by using a same connection.

In a possible implementation, the multi-flow multiplexing parameter may be used to indicate QUIC information related to a traffic flow, QUIC aggregated stream connection information related to a traffic flow, MP-QUIC information related to a traffic flow, MP-QUIC aggregated stream connection information related to a traffic flow, or SCTP connection information related to a traffic flow.

For example, the multi-flow multiplexing parameter may include one or more of the following: protocol indication information, multi-flow multiplexing indication information, a connection identifier, QoS flow granularity indication information, PDU session granularity indication information, and terminal device granularity indication information.

The protocol indication information may be QUIC method indication information, MP-QUIC method indication information, or SCTP method indication information. The QUIC method indication information may be used to indicate that the traffic flow in the PDU session is transmitted by using the QUIC or the aggregated stream connection in the QUIC, and the QUIC method indication information may be a character, a digit, or the like. The MP-QUIC method indication information may be used to indicate that the traffic flow in the PDU session is transmitted by using the MP-QUIC or the aggregated stream connection in the MP-QUIC, and the MP-QUIC method indication information may be a character, a digit, or the like. The SCTP method indication information may be used to indicate that the traffic flow in the PDU session is transmitted by using the SCTP connection, and the SCTP method indication information may be a character, a digit, or the like.

The multi-flow multiplexing indication information may be used to indicate that the QUIC is allowed to be shared by the plurality of traffic flows. The multi-flow multiplexing indication information may be a character, a character string, a digit, or the like. For example, when the multi-flow multiplexing indication information is set to True, it indicates that the traffic flow can share one QUIC with another traffic flow; or when the multi-flow multiplexing indication information is set to False, it indicates that the traffic flow cannot share one QUIC with another traffic flow. For another example, when the multi-flow multiplexing indication information is set to False, it indicates that the traffic flow can share one QUIC with another traffic flow; or when the multi-flow multiplexing indication information is set to True, it indicates that the traffic flow cannot share one QUIC with another traffic flow. For still another example, the multi-flow multiplexing indication information may be a specified character, a specified character string, a specified digit, or the like. When the multi-flow multiplexing parameter includes the multi-flow multiplexing indication information, it indicates that the traffic flow can share one QUIC with another traffic flow; or when the multi-flow multiplexing parameter does not include the multi-flow multiplexing indication information, it indicates that the traffic flow cannot share one QUIC with another traffic flow. For yet another example, the multi-flow multiplexing indication information may be a specified character, a specified character string, a specified digit, or the like. When the multi-flow multiplexing parameter includes the multi-flow multiplexing indication information, it indicates that the traffic flow cannot share one QUIC with another traffic flow; or when the multi-flow multiplexing parameter does not include the multi-flow multiplexing indication information, it indicates that the traffic flow can share one QUIC with another traffic flow.

The connection identifier is used to indicate a connection identifier corresponding to a traffic flow. For example, the connection identifier may be at least one of an identifier of the QUIC, an identifier of the aggregated stream connection in the QUIC, an identifier of the MP-QUIC, an identifier of the aggregated stream connection in the MP-QUIC, an identifier of the SCTP connection, or another value used to identify the connection. For example, when the traffic flows share the MP-QUIC, the connection identifier is the identifier of the MP-QUIC, or the connection identifier is used to indicate the MP-QUIC. When the traffic flows share the aggregated stream connection in the MP-QUIC, the connection identifier is the identifier of the aggregated stream connection, or the connection identifier is the identifier of the MP-QUIC (or a value used to identify the MP-QUIC) and the identifier of the aggregated stream connection. The connection identifier may be used to implement stream aggregation at a plurality of granularities, including stream aggregation at a traffic flow granularity (where for example, if a plurality of traffic flows have a same connection identifier, the plurality of traffic flows share a connection), or stream aggregation at a QoS flow granularity (where for example, if traffic flows in one or more QoS flows have a same connection identifier, the one or more QoS flows share a connection), or stream aggregation at a PDU granularity (where for example, if traffic flows in one or more PDU sessions have a same connection identifier, the one or more PDU sessions share a connection). In a possible implementation, the multi-flow connection parameter may include the traffic flow description information and the connection identifier. When different traffic flows (for example, traffic flows including different traffic flow description information) correspond to a same connection identifier, it may indicate that the different traffic flows can share a same connection.

The QoS flow granularity indication information is used to indicate that a connection is allowed to be shared by traffic flows in one or more QoS flows (QoS flows). The connection may be the QUIC, the aggregated stream connection in the QUIC, the MP-QUIC, the aggregated stream connection in the MP-QUIC, the SCTP connection, or the like. Subsequently, the terminal device or the UPF network element may select the traffic flow in the one or more QoS flows, and transmit the traffic flow by using the shared connection.

The PDU session granularity indication information is used to indicate that a connection is allowed to be shared by traffic flows in a PDU session. The connection may be the QUIC, the aggregated stream connection in the QUIC, the MP-QUIC, the aggregated stream connection in the MP-QUIC, the SCTP connection, or the like. Subsequently, the terminal device or the UPF network element may select a plurality of traffic flows in one or more PDU sessions, and transmit the plurality of traffic flows by using the shared connection.

The terminal device granularity indication information is used to indicate that a QUIC is allowed to be shared by traffic flows of one terminal device. The connection may be the QUIC, the aggregated stream connection in the QUIC, the MP-QUIC, the aggregated stream connection in the MP-QUIC, the SCTP connection, or the like. Subsequently, the terminal device or the UPF network element may transmit any traffic flow of the terminal device by using the shared connection.

A first message sent by the terminal device to the SMF network element in embodiments of this application may be a message requesting to establish or update a PDU session, or may be a message, requesting to establish or update a PDU session, sent for establishing a multi-access PDU (multi-access PDU, MA PDU) session, or may be any other message. This is not specifically limited in embodiments of this application. The first message sent by the terminal device to the SMF network element may be used to request to establish or update the PDU session.

A second message received by the terminal device from the SMF network element in embodiments of this application may be a PDU session establishment success message, a PDU session update success message, or any other message. This is not specifically limited in embodiments of this application. The second message received by the terminal device from the SMF network element may be used to indicate that the PDU session is successfully established or updated.

The following describes in detail, by using specific embodiments, the technical solutions of this application and how to resolve the foregoing technical problems by using the technical solutions of this application. The following several specific embodiments may be implemented independently or combined with each other, and same or similar concepts or processes may not be repeatedly described in some embodiments.

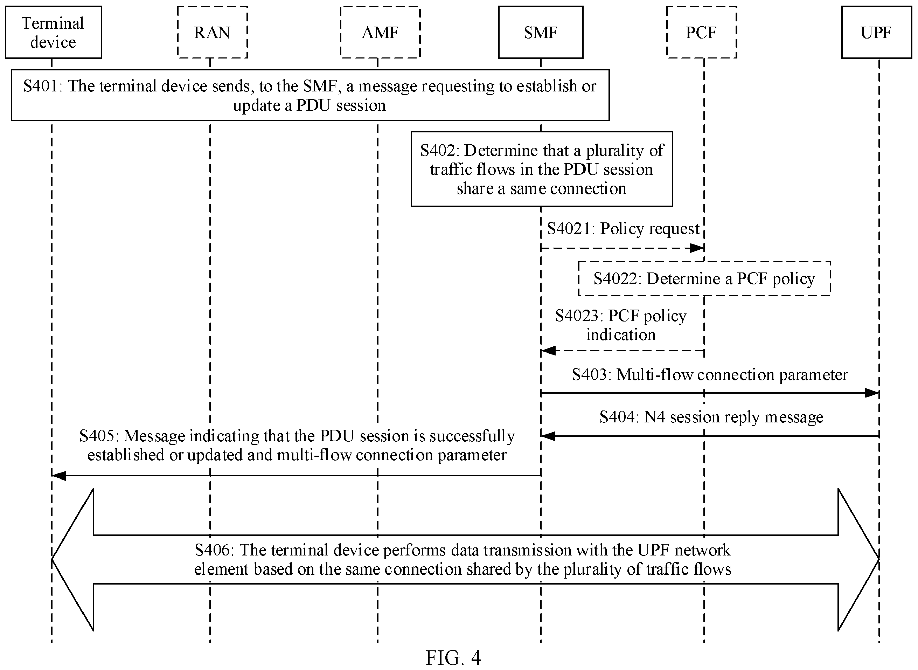

FIG. 4 is a schematic flowchart of a communication method according to an embodiment of this application. The method includes the following steps.

S401: A terminal device sends, to a session management function SMF network element, a message used to request to establish or update a PDU session.

In a possible implementation, the terminal device may encapsulate the message requesting to establish or update the PDU session in a non-access stratum (non-access stratum, NAS) transmission message, and send the non-access stratum transmission message to an AMF network element. The AMF network element forwards the message requesting to establish or update the PDU session to the SMF network element.

In a possible implementation, the terminal device may send a NAS transmission message to an AMF network element through a RAN, where the NAS transmission message includes the message requesting to establish or update the PDU session, and the message requesting to establish or update the PDU session carries indication information used to indicate a protocol capability supported by the terminal device. The AMF network element further forwards the message requesting to establish or update the PDU session to the SMF network element. The indication information of the protocol capability may be indication information of a QUIC capability, indication information of an MP-QUIC capability, indication information of an SCTP capability, or the like.

In a possible implementation, the terminal device sends a NAS transmission message to an AMF network element, where the NAS transmission message includes indication information of a protocol capability supported by the terminal device and the message requesting to establish or update the PDU session. The AMF network element forwards the message requesting to establish or update the PDU session and the indication information of the protocol capability to the SMF network element.

In a possible implementation, a NAS transmission message includes the message requesting to establish or update the PDU session and indication information of a protocol capability supported by the terminal device. An AMF network element selects, based on the indication information of the protocol capability, the SMF network element that supports a protocol function, and further forwards the message requesting to establish or update the PDU session and the indication information of the protocol capability supported by the terminal device to the SMF network element.

The SMF network element may receive a first message from the terminal device, or receive a first message and the indication information of the protocol capability supported by the terminal device.

S402: The SMF network element determines that a plurality of traffic flows related to the PDU session share a same connection.

In this embodiment of this application, the SMF network element may determine, based on a local policy and/or a parameter received from another device (for example, the terminal device, a PCF network element, or a UDM network element), that the plurality of traffic flows related to the PDU session share the same connection. The SMF network element may alternatively determine, based on policy information (which may also be referred to as PCF indication information) sent by the PCF network element, that the plurality of traffic flows related to the PDU session share the same connection, and so on.

In a possible implementation, the SMF network element may determine, by using one or more of the following: traffic flow security or encryption information, a traffic flow QoS parameter, a traffic flow destination address, a traffic flow data network name (Data Network Name, DNN), a traffic flow transmission protocol, a traffic flow type, and a traffic flow offloading mode, that the plurality of traffic flows related to the PDU session share the same connection.

In this embodiment of this application, the traffic flow security or encryption information may be used to indicate a traffic flow security encryption requirement. For example, the traffic flow security or encryption information may include one or more of indication information used to indicate whether encryption needs to be performed, indication information used to indicate whether integrity protection needs to be performed, security level information, an encryption algorithm, or the like.

For example, if the plurality of traffic flows have a same security encryption requirement, the SMF network element may determine that the plurality of traffic flows can share the same connection. For example, if the plurality of traffic flows carry same indication information indicating that encryption needs to be performed, the SMF network element may determine that the plurality of traffic flows can share the same connection. For another example, if the plurality of traffic flows carry same indication information indicating that integrity protection needs to be performed, the SMF network element may determine that the plurality of traffic flows can share the same connection. For still another example, if the plurality of traffic flows carry same security level information, the SMF network element may determine that the plurality of traffic flows can share the same connection. For yet another example, if the plurality of traffic flows carry a same encryption algorithm, the SMF network element may determine that the plurality of traffic flows can share the same connection.

For example, the SMF network element may determine, based on the traffic flow security or encryption information, whether the traffic flows can be aggregated to a same QoS flow. When the plurality of traffic flows have same security or encryption information, the plurality of traffic flows may be mapped to a same QoS flow, to implement security encryption at a QoS flow granularity.

For example, the SMF network element may determine, based on the traffic flow security or encryption information, whether the traffic flows in the PDU session can be aggregated to a same connection. When all of the traffic flows in the PDU session have same security or encryption information, the plurality of traffic flows may be mapped to a same connection, to implement security encryption at a PDU session granularity.

The traffic flow security or encryption information may be obtained by the SMF network element from subscription data of the terminal device, or may be received by the SMF network element from the PCF network element, or may be locally configured by the SMF network element. Alternatively the SMF network element receives, from the PCF network element, indication information indicating that encryption and/or integrity protection need/needs to be performed for the traffic flows. The SMF network element determines, based on an access technology for transmitting the traffic flows, to perform encryption between UE and a UPF network element for the traffic flows, where the access technology includes a 3GPP access technology, a non-3GPP access technology, a Wi-Fi access technology, a fixed network access technology, a wired access technology, or the like. For example, when the traffic flows perform access by using the non-3GPP, Wi-Fi, fixed network, or wired network access technology, and the SMF network element receives the indication information, sent by the PCF network element, indicating that encryption and/or integrity protection need/needs to be performed, the SMF network element determines that encryption and/or integrity protection between the UE and the UPF network element are/is implemented for the traffic flows. A source of the traffic flow security or encryption information is not specifically limited in this embodiment of this application.

When the traffic flows carry the security or encryption information, the SMF network element may subsequently separately send the security or encryption information to the UPF network element and the terminal device, to encrypt the traffic flows when the UPF network element and the terminal device transmit the traffic flows. This improves security of traffic flow transmission.

In this embodiment of this application, the traffic flow QoS parameter may be used to indicate a QoS parameter of the traffic flow. If QoS parameters of the plurality of traffic flows are the same or meet a specific relationship, the SMF network element may determine that the plurality of traffic flows can share the same connection. For example, the traffic flow QoS parameter may include at least one of a 5QI (5G QoS Identifier), an allocation and retention priority (allocation and retention priority, ARP), a bandwidth, a delay, or a packet loss rate parameter. When one or more of the QoS parameters of the plurality of traffic flows are the same, the plurality of traffic flows can share the same connection. For example, if a 5QI of a traffic flow 1=1, and a 5QI of a traffic flow 2=1, the traffic flow 1 and the traffic flow 2 can share a same connection.

In this embodiment of this application, whether the plurality of traffic flows can share the same connection may alternatively be determined based on a traffic flow QoS type. For example, if the plurality of traffic flows are all non-guaranteed bit rate (non-guaranteed bit rate, non-GBR) traffic flows, the SMF network element may determine that the plurality of traffic flows can share the same connection.

In this embodiment of this application, the traffic flow destination address may be a destination IP address or a destination MAC address of the traffic flow. If destination addresses of the plurality of traffic flows are the same, the SMF network element may determine that the plurality of traffic flows can share the same connection.

In this embodiment of this application, the traffic flow data network name (Data Network Name, DNN) may be obtained by the SMF network element from the subscription data of the terminal device. If DNNs of the plurality of traffic flows are the same, the SMF network element may determine that the plurality of traffic flows can share the same connection. In this solution, one or more PDU sessions can share a same connection. For example, if a DNN corresponding to a PDU 1=Internet, and a DNN corresponding to a PDU session 2=Internet, all traffic flows of the PDU session 1 and the PDU session 2 can share a same connection.

In this embodiment of this application, the traffic flow transmission protocol may be a UDP or a transmission control protocol (transmission control protocol, TCP). If transmission protocols of the plurality of traffic flows are the same, the SMF network element may determine that the plurality of traffic flows can share the same connection. For example, if a traffic flow 1 is a traffic flow transmitted by using the UDP, and a traffic flow 2 is also a service flow transmitted by using the UDP, the traffic flow 1 and the traffic flow 2 share a connection.

In this embodiment of this application, the traffic flow type may include a video service, a voice service, a game service, a web browsing service, or the like. If the plurality of traffic flows have a same type, the SMF network element may determine that the plurality of traffic flows can share the same connection.

In this embodiment of this application, the traffic flow offloading mode may be a load balancing offloading mode, a priority-based offloading mode (where for example, a traffic flow is preferentially transmitted by using an access technology with a high priority), an active/standby offloading mode, a minimum-delay offloading mode (where for example, a traffic flow is transmitted through a link with a minimum delay), or the like. If offloading modes of the plurality of traffic flows are the same, the SMF network element may determine that the plurality of traffic flows can share the same connection.

In addition, in this embodiment of this application, sharing of a plurality of connections at a PDU session granularity or a UE granularity may alternatively be implemented based on at least one of slice information or session or service continuity (session and service continuity, SSC) mode information. For example, if the plurality of PDU sessions belong to a same slice, all traffic flows of the PDU sessions can share a same connection. Alternatively, if SSC modes of the plurality of PDU sessions are the same, all traffic flows of the PDU sessions can share a same connection.

In an implementation in which the SMF network element determines, based on the PCF indication information of the PCF network element, that the plurality of traffic flows related to the PDU session share the same connection, the SMF network element needs to interact with the PCF network element. This is described in a subsequent embodiment. Details are not described herein again.

In a possible implementation, the SMF network element may determine, based on a plurality of indications in the subscription data of the terminal device, a local configuration policy, or the policy information obtained from the PCF network element, that the plurality of traffic flows in the PDU session share the same connection by combining a plurality of policies.

For example, when the plurality of indications in the subscription data of the terminal device, the local configuration policy, and the policy information obtained from the PCF network element are consistent, the SMF network element may determine that the plurality of traffic flows in the PDU session share the same connection.

For another example, when the plurality of indications in the subscription data of the terminal device, the local configuration policy, or the policy information obtained from the PCF network element are consistent, information with a relatively high priority may be selected to determine that the plurality of traffic flows in the PDU session share the same connection. Priorities of the three types of information, namely, the subscription data of the terminal device, the local configuration policy, and the policy indication information obtained from the PCF network element may be set based on an actual application scenario. For example, the priorities of the three types of information may be defined to sequentially increase or decrease, or the priority of the policy information of the PCF may be defined to be the highest.

In this embodiment of this application, when determining that the plurality of traffic flows related to the PDU session share the same connection, the SMF network element may determine a multi-flow connection parameter based on a parameter or the like used when the SMF network element determines that the plurality of traffic flows related to the PDU session share the same connection, and send the multi-flow connection parameter to the UPF network element.

S403: The SMF network element sends the multi-flow connection parameter to the UPF network element.

The UPF network element may establish, for the traffic flows based on the multi-flow connection parameter configured by the SMF network element, the same connection shared by the plurality of traffic flows.

For example, the UPF network element may store the multi-flow connection parameter sent by the SMF network element. In this case, when transmitting the traffic flows, the UPF may transmit the plurality of traffic flows by using the same connection. In a possible implementation, the SMF network element sends a correspondence between a traffic description parameter and the encryption and/or integrity protection indication information to the UPF network element, to indicate that encryption and/or integrity protection need/needs to be performed on the traffic flows. For example, when the encryption and/or integrity protection indication information is included, it indicates that encryption and/or integrity protection need/needs to be performed on a related traffic flow. If no encryption and/or integrity protection indication information is included, it indicates that encryption and/or integrity protection may not be performed on a related traffic flow.

S404: The UPF network element sends an N4 session reply message to the SMF network element, where the N4 session reply message may be used to indicate that an N4 session is successfully established.

Optionally, the UPF network element may modify the multi-flow connection parameter sent by the SMF network element. For example, the UPF network element updates a connection identifier in a multi-flow multiplexing parameter sent by the SMF network element; or when the UPF network element determines that the plurality of traffic flows share the connection, the UPF network element updates a connection identifier in a multi-flow multiplexing parameter sent by the SMF network element. If the UPF network element updates the multi-flow connection parameter, the UPF network element sends an updated multi-flow connection parameter to the SMF network element by using an N4 session response message.

In another possible implementation, the SMF network element does not need to configure the multi-flow connection parameter in step S402, and the SMF network element may determine, based on the indication information sent by the UPF network element in S404, that the plurality of traffic flows related to the PDU session share the same connection. For example, the UPF network element determines that the plurality of traffic flows in the PDU session share the same connection, and sends the multi-flow connection parameter to the SMF network element. The indication information sent by the UPF network element may be the multi-flow connection parameter. This process is described in detail in a subsequent embodiment. Details are not described herein again.

S405: The SMF network element sends a second message and a multi-flow connection parameter to the terminal device, where the second message is a message indicating that the PDU session is successfully established or updated. Optionally, the SMF sends the encryption and/or integrity protection indication information to the UE.

In a possible implementation, the encryption and/or integrity protection indication information is used to indicate to perform encryption and/or integrity protection on the traffic flows, or the encryption and/or integrity protection indication information is used to indicate not to perform encryption and/or integrity protection on the services.

In this embodiment of this application, the multi-flow connection parameter may be carried in the second message for sending. For example, the second message carrying the multi-flow connection parameter may be encapsulated in the NAS transmission message for sending. Alternatively, the multi-flow connection parameter and the second message may be separately sent. For example, the multi-flow connection parameter and the second message may be separately encapsulated in the NAS transmission message for sending. This is not specifically limited in this embodiment of this application.

The multi-flow connection parameter sent by the SMF network element to the terminal device may be the same as or different from the multi-flow connection parameter sent by the SMF network element to the UPF network element in S403. For example, the multi-flow connection parameter sent by the SMF network element to the terminal device includes traffic flow description information and a connection identifier, and the multi-flow connection parameter sent by the SMF network element to the UPF network element includes traffic flow description information and protocol indication information.

In a possible implementation, the SMF network element sends a correspondence between a traffic description parameter and the encryption and/or integrity protection indication information to the terminal device, to indicate that encryption and/or integrity protection need/needs to be performed on the traffic flows. For example, when the encryption and/or integrity protection indication information is included, it indicates that encryption and/or integrity protection need/needs to be performed on a related traffic flow. If no encryption and/or integrity protection indication is included, it indicates that encryption and/or integrity protection may not be performed on a related traffic flow.

S406: The terminal device performs data transmission with the UPF network element based on the connection shared by the plurality of traffic flows.

In conclusion, in this embodiment of this application, a network side may control establishment of the connection, between the terminal device and the UPF network element, allowed to be shared by the plurality of traffic flows, thereby reducing a connection establishment process and improving transmission efficiency.

For the embodiment corresponding to FIG. 4, in a possible implementation, S402 may be implemented as follows: The SMF network element may determine, based on the PCF indication information (which may also be referred to as PCF policy information) obtained from the PCF network element, that the plurality of traffic flows in the PDU session share the same connection.

For example, as shown in FIG. 4, S402 may include the following steps: S4021: The SMF network element sends a policy request (policy request) to the PCF network element. S4022: The PCF network element determines that the plurality of traffic flows in the PDU session share the same connection (which may also be referred to as a PCF policy). S4023: The PCF network element sends the PCF policy information to the SMF network element, where the PCF policy information may include one or both of the traffic flow description parameter or the multi-flow multiplexing parameter.

In this embodiment of this application, a basis for determining, by the PCF network element, that the plurality of traffic flows in the PDU session share the same connection is similar to a basis for determining, by the SMF network element, that the plurality of traffic flows in the PDU session share the same connection. For example, the PCF network element may determine, by using one or more of the following: traffic flow security or encryption information, a traffic flow QoS parameter, a traffic flow destination address, a traffic flow data network name (Data Network Name, DNN), a traffic flow transmission protocol, a traffic flow type, and a traffic flow offloading mode, that the plurality of traffic flows related to the PDU session share the same connection. Details are not described herein.

In a possible implementation, the policy request sent by the SMF network element to the PCF network element may include indication information (for example, indication information of a QUIC capability, indication information of an MP-QUIC capability, or indication information of an SCTP capability) used to indicate a protocol capability supported by the terminal device, where the indication information indicates a protocol that can be used when offloading and aggregation are performed on the traffic flows in the PDU session. The PCF network element may determine, based on the indication information of the protocol capability supported by the terminal device, a local policy of the PCF network element, subscription data of the terminal, or the like, whether the plurality of traffic flows in the PDU session can share the same connection. When the PCF network element determines that the plurality of traffic flows in the PDU session share the same connection, the PCF network element may send the PCF policy information to the SMF network element, where the PCF policy information includes information used to indicate the same connection shared by the plurality of traffic flows in the PDU session.

In a possible implementation, the PCF network element may further determine a granularity of the connection that is allowed to be shared by the plurality of traffic flows, for example, whether the connection is allowed to be shared by traffic flows in different PDU sessions or shared by different traffic flows in a same PDU session. When the connection is allowed to be shared by a plurality of PDU sessions, the PCF indication information may include at least one of terminal device granularity indication information or an identifier of another PDU session whose connection is allowed to be shared. When a connection is allowed to be shared by a plurality of traffic flows in one PDU session, the PCF policy may include PDU session granularity indication information.

In a possible implementation, the PCF network element receives the policy request from the SMF network element, and the PCF network element may perform the following operations when the traffic flows in the PDU session are UDF traffic flows: The PCF network element may determine, based on the local policy of the PCF network element, the subscription data of the terminal, or the like, whether the plurality of traffic flows in the PDU session can share the same connection. When determining that the plurality of traffic flows in the PDU session share the same connection, the PCF network element may send the PCF policy information to the SMF network element, where the PCF indication information includes information used to indicate the same connection shared by the plurality of traffic flows in the PDU session.

In a possible implementation, the PCF network element sends a correspondence between the traffic flow description parameter and the encryption and/or integrity protection indication information to the SMF network element, to indicate that encryption and/or integrity protection need/needs or do/does not need to be performed on the traffic flows. Subsequently, the SMF network element may determine, based on the security or encryption information of the traffic flows, whether the plurality of traffic flows can be aggregated to a same connection. When the plurality of traffic flows have same encryption and/or integrity protection indication information, the plurality of traffic flows can be mapped to the same connection. Details are not described herein. For example, the PCF network element may determine, based on at least one of a local policy, user subscription data, or an access technology for traffic flow transmission, whether encryption and/or integrity protection needs to be performed for the traffic flows. The access technology includes a 3GPP access technology, a non-3GPP access technology, a Wi-Fi access technology, a fixed network access technology, a wired access technology, or the like. For example, when the PCF network element perceives that the traffic flows are transmitted by using the non-3GPP access technology, the fixed network access technology, or the wired access technology, the PCF network element delivers an indication indicating that encryption and/or integrity protection need/needs to be performed, or the PCF network element delivers an indication indicating that encryption and/or integrity protection need/needs to be performed.

For the embodiment corresponding to FIG. 4, in a possible implementation, S402 may be implemented as follows: The SMF network element may determine, based on an indication of the UPF network element, that the plurality of traffic flows in the PDU session share the same connection.

In this embodiment of this application, a basis for determining, by the UPF network element, that the plurality of traffic flows in the PDU session share the same connection is similar to a basis for determining, by the SMF network element, that the plurality of traffic flows in the PDU session share the same connection. For example, the UPF network element may determine, by using one or more of the following: traffic flow security or encryption information, a traffic flow QoS parameter, a traffic flow destination address, a traffic flow data network name (Data Network Name, DNN), a traffic flow transmission protocol, a traffic flow type, and a traffic flow offloading mode, that the plurality of traffic flows related to the PDU session share the same connection. Details are not described herein.

In this embodiment of this application, the SMF network element may not send the multi-flow connection parameter in S403. In a possible implementation, S403 may be replaced with sending, by the SMF network element, the traffic flow description parameter, and QUIC method indication information or MP-QUIC method indication information or SCTP method indication information to the UPF network element, to indicate a protocol that can be used when offloading and aggregation are performed on the traffic flows in the PDU session. In addition, the SMF network element may send a QoS parameter related to the traffic flow or the like to the UPF network element. The UPF network element may determine, based on the information sent by the SMF network element, a local policy, and/or the like, whether the plurality of traffic flows in the PDU session can share the same connection. When the UPF network element determines that the plurality of traffic flows in the PDU session share the same connection, the UPF network element may send, to the SMF network element, information (for example, the multi-flow connection parameter) used to indicate the same connection shared by the plurality of traffic flows in the PDU session.

In a possible implementation, the UPF network element may further determine a granularity of the connection that is allowed to be shared by the plurality of traffic flows, for example, whether the connection is allowed to be shared by traffic flows in different PDU sessions or shared by different traffic flows in a same PDU session. When the connection is allowed to be shared by a plurality of PDU sessions, the UPF network element may send, to the SMF network element, at least one of terminal device granularity indication information or an identifier of another PDU session whose connection is allowed to be shared. When a connection is allowed to be shared by a plurality of traffic flows in one PDU session, the UPF network element may send PDU session granularity indication information to the SMF network element.

In a possible implementation, the PCF network element sends a correspondence between the traffic flow description parameter and the encryption and/or integrity protection indication information to the SMF network element, to indicate that encryption and/or integrity protection need/needs or do/does not need to be performed on the traffic flows. Subsequently, the SMF network element sends the correspondence between the traffic flow description parameter and the encryption and/or integrity protection indication information to the UPF network element, and the UPF network element may determine, based on the security or encryption information of the traffic flows, whether the plurality of traffic flows can be aggregated to a same connection. When the plurality of traffic flows have same encryption and/or integrity protection indication information, the plurality of traffic flows can be mapped to the same connection. Details are not described herein.

In a possible implementation, in the embodiment corresponding to FIG. 4, the connection shared by the plurality of traffic flows is a QUIC.

For example, the SMF network element may further determine a QUIC function parameter, and send the QUIC function parameter to the terminal device and the UPF network element, so that the terminal device and the UPF network element can establish the QUIC based on the QUIC function parameter. The QUIC function parameter may include one or more of the following: a QUIC function IP address, a QUIC function port number, a QUIC identifier, an indication parameter of a QUIC omitted connection identifier, QUIC version information, a security parameter, or a transmission parameter.

The QUIC function IP address is an IP address used for the QUIC, for example, an IP address of a QUIC function (or referred to as a QUIC proxy function) on a network side, for example, an IP address corresponding to a QUIC function (or a QUIC proxy function) implemented on the UPF network element. For example, when performing QUIC encapsulation on the traffic flows, the terminal device may encapsulate the QUIC function IP address. During specific application, the QUIC function IP address may be data used to identify an address, such as a character or a digit.

The QUIC function port may be used to indicate a port number corresponding to the QUIC, including a port number corresponding to a network-side QUIC function and/or a port number corresponding to a terminal-side QUIC function. During specific application, the QUIC function port may be data used to identify a port number, such as a character or a digit.

The QUIC identifier is a connection identifier allocated by the SMF network element or the UPF network element to one QUIC, and may be used together with the QUIC identifier allocated by the terminal device to identify one QUIC, or may identify one QUIC based on the connection identifier allocated by the SMF network element or the UPF network element. In a possible implementation, if the UPF network element receives a first QUIC identifier, the UPF network element may store the first QUIC identifier. Subsequently, the UPF network element may encapsulate a service data packet by using at least one of the first QUIC identifier or a second QUIC identifier allocated by the SMF network element or the UPF network element, for example, encapsulate the service data packet by using a QUIC protocol header, and include the first QUIC identifier or the second QUIC identifier in the QUIC protocol header, or include both the first QUIC identifier and the second QUIC identifier in the QUIC protocol header.

The QUIC version information is a QUIC version used by the QUIC. The QUIC version information may be QUIC version information supported by the SMF network element or the UPF network element, or QUIC version information determined by the SMF network element or the UPF network element based on version information supported by the terminal device.

The security parameter may be used to encrypt data transmitted in the QUIC. For example, the security parameter may include encryption algorithm information, an encryption indication, a non-encryption indication (for example, indicating a null encryption algorithm to indicate that encryption is not performed), a security certificate, or the like. During specific application, the security parameter may be a character, a digit, or the like.

The transmission parameter may be used to control a transmission process of the QUIC. The transmission parameter may be, for example, idle timeout, stateless_reset_token, or max_packet_size. For details, refer to a definition of the transmission parameter in the QUIC protocol. Details are not described herein again.

The indication parameter of the QUIC omitted connection identifier indicates that the QUIC does not use a connection identifier. If the QUIC function parameter includes the indication parameter of the QUIC omitted connection identifier, the connection identifier may not be used when the terminal device subsequently performs QUIC packet header encapsulation on the traffic flows after establishing the QUIC. If the UPF network element receives the indication parameter of the QUIC omitted connection identifier, the UPF network element may not include the connection identifier in a QUIC packet header when encapsulating the data by using the QUIC protocol header.

The terminal device and the UPF network element may transmit the plurality of traffic flows by using a same QUIC.

For example, in an uplink, when the terminal device initiates, based on the multi-flow multiplexing parameter, the QUIC and then sends, to the UPF network element, a traffic flow data packet transmitted by using the QUIC, the terminal device may perform QUIC packet header encapsulation on the traffic flow data packet, and a QUIC packet header may carry one or more of the QUIC function parameters. For example, the QUIC identifier may be carried in the QUIC packet header. A destination IP address or a port number in the QUIC packet header may be set to the IP address or the port number of the QUIC function. Security encryption may be performed on the traffic flow data packet based on the security parameter. If the QUIC for the indication parameter of the QUIC omitted connection identifier is used, the QUIC packet header does not carry the QUIC identifier.

When a new traffic flow is transmitted based on the QUIC, the terminal device may determine, based on the multi-flow multiplexing parameter, whether there is an existing QUIC available. If there is an existing QUIC available, the UE transmits the service data packet by using the existing QUIC. For example, if the new traffic flow belongs to a QFI 1, and the QFI 1 shares a same QUIC, the new traffic flow may be transmitted by using the QUIC of the traffic flow in the QFI 1. In an optional implementation, if the QUIC has a QUIC identifier, the terminal device may encapsulate the traffic flow data packet by using the QUIC identifier.

For example, in a downlink, when the UPF network element initiates, based on the multi-flow multiplexing parameter, the QUIC and then sends, to the terminal device, a traffic flow data packet transmitted by using the QUIC, the UPF network element may perform QUIC packet header encapsulation on the traffic flow data packet, and a QUIC packet header may carry one or more of the QUIC function parameters.

If the QUIC is a QUIC at a PDU session granularity, the UPF network element may transmit the plurality of traffic flows in the PDU session by using the QUIC. If the QUIC uses a connection identifier, the UPF encapsulates the traffic flow data packet of the PDU session by using the connection identifier.

If the QUIC is a QUIC at a QoS flow granularity, the UPF network element may transmit service data packets of QoS flows by using different QUICs. For example, the UPF network element may establish a QUIC 1 for a QoS flow 1, and establish a QUIC 2 for a QoS flow 2 and a QoS flow 3. A traffic flow data packet of the QoS flow 1 is transmitted by using the QUIC 1, and a traffic flow data packet of the QoS flow 2 or the QoS flow 3 is transmitted by using the QUIC 2. If the QUIC uses a connection identifier, the UPF encapsulates the service data packets of the QoS flows by using related connection identifiers.

In a possible implementation, if the QoS flow corresponding to the QUIC is selected by the UPF network element, the UPF network element may send a QFI bound to the QUIC to the SMF network element. For example, if the UPF network element establishes a same QUIC for a QFI 1 and a QFI 2, the UPF notifies the SMF that the QUIC corresponds to the QFI 1 and the QFI 2. If the QUIC uses a connection identifier and the connection identifier is allocated by the UPF network element, the UPF network element may notify the SMF network element of the connection identifier. For example, for traffic flows transmitted by using a same QUIC, the UPF network element returns a same connection identifier to the SMF network element.

If the QUIC is a QUIC at a terminal device granularity, the UPF network element may transmit traffic flow data packets of some or all PDU sessions by using the QUIC.

In a possible implementation, in the embodiment corresponding to FIG. 4, the connection shared by the plurality of traffic flows is an MP-QUIC.

For example, the SMF network element may further determine an MP-QUIC function parameter, and send the MP-QUIC function parameter to the terminal device and the UPF network element, so that the terminal device and the UPF network element can establish the MP-QUIC based on the MP-QUIC function parameter. The MP-QUIC function parameter may include one or more of the following: an MP-QUIC function IP address, an MP-QUIC function port number, an MP-QUIC identifier, an indication parameter of an MP-QUIC omitted connection identifier, MP-QUIC version information, a security parameter, or a transmission parameter.

The MP-QUIC function IP address is an IP address used for the MP-QUIC, for example, an IP address of an MP-QUIC function (or referred to as an MP-QUIC proxy function) on a network side, for example, an IP address corresponding to an MP-QUIC function (or an MP-QUIC proxy function) implemented on the UPF network element. For example, when performing MP-QUIC encapsulation on the traffic flows, the terminal device may encapsulate the MP-QUIC function IP address. During specific application, the MP-QUIC function IP address may be data used to identify an address, such as a character or a digit.

The MP-QUIC function port may be used to indicate a port number corresponding to the MP-QUIC, including a port number corresponding to a network-side MP-QUIC function and/or a port number corresponding to a terminal-side MP-QUIC function. During specific application, the MP-QUIC function port may be data used to identify a port number, such as a character or a digit.

The MP-QUIC identifier is a connection identifier allocated by the SMF network element or the UPF network element to one MP-QUIC, and may be used together with the MP-QUIC identifier allocated by the terminal device to identify one MP-QUIC, or may identify one MP-QUIC based on the connection identifier allocated by the SMF network element or the UPF network element. In a possible implementation, if the UPF network element receives a first MP-QUIC identifier, the UPF network element may store the first MP-QUIC identifier. Subsequently, the UPF network element may encapsulate a service data packet by using at least one of the first MP-QUIC identifier or a second MP-QUIC identifier allocated by the SMF network element or the UPF network element, for example, encapsulate the service data packet by using an MP-QUIC protocol header, and include the first MP-QUIC identifier or the second MP-QUIC identifier in the MP-QUIC protocol header, or carry both the first MP-QUIC identifier and the second MP-QUIC identifier in the MP-QUIC protocol header.

The MP-QUIC version information is an MP-QUIC version used by the MP-QUIC. The MP-QUIC version information may be MP-QUIC version information supported by the SMF network element or the UPF network element, or MP-QUIC version information determined by the SMF network element or the UPF network element based on version information supported by the terminal device.

The security parameter may be used to encrypt data transmitted in the MP-QUIC. For example, the security parameter may include encryption algorithm information, an encryption indication, a non-encryption indication (for example, indicating a null encryption algorithm to indicate that encryption is not performed), a security certificate, or the like. During specific application, the security parameter may be a character, a digit, or the like.

The transmission parameter may be used to control a transmission process of the MP-QUIC. The transmission parameter may be, for example, idle _timeout, stateless _reset token, max_packet_size. For details, refer to a definition of the transmission parameter in the MP-QUIC protocol. Details are not described herein again.

The indication parameter of the MP-QUIC omitted connection identifier indicates that the MP-QUIC does not use a connection identifier. If the MP-QUIC function parameter includes the indication parameter of the MP-QUIC omitted connection identifier, the connection identifier may not be used when the terminal device subsequently performs MP-QUIC packet header encapsulation on the traffic flows after establishing the MP-QUIC. If the UPF network element receives the indication parameter of the MP-QUIC omitted connection identifier, the UPF network element may not include the connection identifier in an MP-QUIC packet header when encapsulating the data by using the MP-QUIC protocol header.

The terminal device and the UPF network element may transmit the plurality of traffic flows by using a same MP-QUIC.

For example, in an uplink, when the terminal device initiates, based on the multi-flow multiplexing parameter, the MP-QUIC and then sends, to the UPF network element, a traffic flow data packet transmitted by using the MP-QUIC, the terminal device may perform MP-QUIC packet header encapsulation on the traffic flow data packet, and an MP-QUIC packet header may carry one or more of the MP-QUIC function parameters. For example, the MP-QUIC identifier may be carried in the MP-QUIC packet header. A destination IP address or a port number in the MP-QUIC packet header may be set to the IP address or the port number of the MP-QUIC function. Security encryption may be performed on the traffic flow data packet based on the security parameter. If the MP-QUIC for the indication parameter of the MP-QUIC omitted connection identifier is used, the MP-QUIC packet header does not carry the MP-QUIC identifier.

When a new traffic flow is transmitted based on the MP-QUIC, the terminal device may determine, based on the multi-flow multiplexing parameter, whether there is an existing MP-QUIC available. If there is an existing MP-QUIC available, the UE transmits the service data packet by using the existing MP-QUIC. For example, if the new traffic flow belongs to a QFI 1, and the QFI 1 shares a same MP-QUIC, the new traffic flow may be transmitted by using the MP-QUIC of the traffic flow of the QFI 1. In an optional implementation, if the MP-QUIC has an MP-QUIC identifier, the terminal device may encapsulate the traffic flow data packet by using the MP-QUIC identifier.

For example, in a downlink, when the UPF network element initiates, based on the multi-flow multiplexing parameter, the MP-QUIC and then sends, to the terminal device, a traffic flow data packet transmitted by using the MP-QUIC, the UPF network element may perform MP-QUIC packet header encapsulation on the traffic flow data packet, and an MP-QUIC packet header may carry one or more of the MP-QUIC function parameters.

If the MP-QUIC is an MP-QUIC at a PDU session granularity, the UPF network element may transmit the plurality of traffic flows in the PDU session by using the MP-QUIC. If the MP-QUIC uses a connection identifier, the UPF encapsulates the traffic flow data packet of the PDU session by using the connection identifier.

If the MP-QUIC is an MP-QUIC at a QoS flow granularity, the UPF network element may transmit service data packets of QoS flows by using different MP-QUICs. For example, the UPF network element may establish an MP-QUIC 1 for a QoS flow 1, and establish an MP-QUIC 2 for a QoS flow 2 and a QoS flow 3. A traffic flow data packet of the QoS flow 1 is transmitted by using the MP-QUIC 1, and a traffic flow data packet of the QoS flow 2 or the QoS flow 3 is transmitted by using the MP-QUIC 2. If the MP-QUIC uses a connection identifier, the UPF encapsulates the service data packets of the QoS flows by using related connection identifiers.

In a possible implementation, if the QoS flow corresponding to the MP-QUIC is selected by the UPF network element, the UPF network element may send a QFI bound to the MP-QUIC to the SMF network element. For example, if the UPF network element establishes a same MP-QUIC for the QFI 1 and the QFI 2, the UPF notifies the SMF that the MP-QUIC corresponds to the QFI 1 and the QFI 2. If the MP-QUIC uses a connection identifier and the connection identifier is allocated by the UPF network element, the UPF network element may notify the SMF network element of the connection identifier. For example, for traffic flows transmitted by using a same MP-QUIC, the UPF network element returns a same connection identifier to the SMF network element.

If the MP-QUIC is an MP-QUIC at a terminal device granularity, the UPF network element may transmit traffic flow data packets of some or all PDU sessions by using the MP-QUIC.

A difference from the QUIC is that, the MP-QUIC includes a plurality of sub-connections, and each sub-connection has a sub-connection identifier. For example, the UPF network element allocates a connection identifier a to an MP-QUIC sub-connection accessed through 3GPP, or the UPF network element allocates a connection identifier b to an MP-QUIC sub-connection accessed through non-3GPP When a traffic flow data packet is transmitted through 3GPP, the terminal device includes a sub-connection identifier (for example, an identifier a) corresponding to the 3GPP access technology in the MP-QUIC packet header. If a data packet is transmitted through non-3 GPP, the terminal device includes a sub-connection identifier (for example, an identifier b) corresponding to the non-3GPP access technology in the MP-QUIC header.

In this embodiment of this application, when the MP-QUIC packet header is used to encapsulate the data, a sub-connection link may be clearly identified. If a packet loss rate is subsequently collected, a specific link on which a severe packet loss occurs may be learned.

In a possible implementation, in the embodiment corresponding to FIG. 4, the connection shared by the plurality of traffic flows is an SCTP connection.

For example, the SMF network element may further determine an SCTP function parameter, and send the SCTP function parameter to the terminal device and the UPF network element, so that the terminal device and the UPF network element can establish the SCTP connection based on the SCTP function parameter. In this way, the method in the embodiment of FIG. 4 is implemented.

The foregoing describes the method in embodiments of this application with reference to FIG. 4. The following describes a communication apparatus that is provided in embodiments of this application and that performs the foregoing method. A person skilled in the art may understand that the method and the apparatus may be mutually combined and referenced. The communication apparatus provided in embodiments of this application may perform the steps performed by the SMF network element in the foregoing communication method. Another communication apparatus may perform the steps performed by the UPF network element in the communication method in the foregoing embodiment. Still another communication apparatus may perform the steps performed by the terminal device in the communication method in the foregoing embodiment.

An example in which each functional module is obtained through division based on a corresponding function is used below for description.

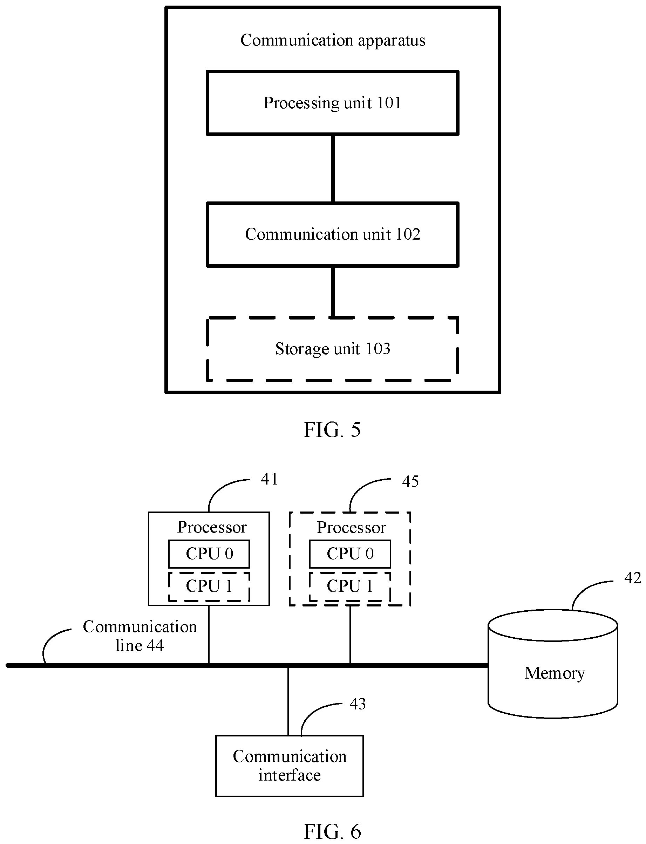

FIG. 5 is a schematic diagram of a structure of a communication apparatus according to an embodiment of this application. The communication apparatus may be an SMF network element, a UPF network element, or a terminal device in embodiments of this application, or may be a chip used in the SMF network element, the UPF network element, or the terminal device. The communication apparatus includes a processing unit 101 and a communication unit 102. The communication unit 102 is configured to support the communication apparatus in performing the step of sending or receiving information. The processing unit 101 is configured to support the communication apparatus in performing the step of processing information.

In an example, the communication apparatus is an SMF network element or a chip or a chip system used in the SMF network element. The communication unit 102 is configured to support the communication apparatus in performing S401, S403, S404, and S405 in the foregoing embodiment. The processing unit 101 is configured to support the communication apparatus in performing S402 in the foregoing embodiment.

In a possible embodiment, the communication unit 102 is further configured to support the communication apparatus in performing S4021 and S4023 in the foregoing embodiment.

In another example, the communication apparatus is a UPF network element or a chip or a chip system used in the UPF network element. The communication unit 102 is configured to support the communication apparatus in performing steps S403 and S404 in the foregoing embodiment. The processing unit 101 is configured to support the communication apparatus in performing S406 in the foregoing embodiment.

In still another example, the communication apparatus is a terminal device or a chip or a chip system used in the terminal device. The communication unit 102 is configured to support the communication apparatus in performing S401 and S405 in the foregoing embodiment. The processing unit 101 is configured to support the communication apparatus in performing S406 in the foregoing embodiment.

In a possible embodiment, the communication apparatus may further include a storage unit 103. The processing unit 101, the communication unit 102, and the storage unit 103 are connected through a communication bus.

The storage unit 103 may include one or more memories. The memory may be a component configured to store a program or data in one or more devices or circuits.

The storage unit 103 may exist independently, and is connected to the processing unit 101 of the communication apparatus through the communication bus. The storage unit 103 may alternatively be integrated with the processing unit.

The communication apparatus may be used in a communication device, a circuit, a hardware component, or a chip.

For example, the communication apparatus may be the chip or the chip system used in the SMF network element, the UPF network element, or the terminal device in embodiments of this application. In this case, the communication unit 102 may be an input or output interface, a pin, a circuit, or the like. For example, the storage unit 103 may store computer-executable instructions of the method on an SMF network element side, a UPF network element side, or a terminal device side, so that the processing unit 101 performs the method on the SMF network element side, the UPF network element side, or the terminal device side in the foregoing embodiment. The storage unit 103 may be a register, a cache, a RAM, or the like. The storage unit 103 may be integrated into the processing unit 101. The storage unit 103 may be a ROM or another type of static storage device that can store static information and instructions, and the storage unit 103 may be independent of the processing unit 101.

An embodiment of this application provides a communication apparatus. The communication apparatus includes one or more modules, configured to implement the method in S401 to S406. The one or more modules may correspond to the steps in the method in S401 to S406. Specifically, for each step in the method performed by the SMF network element in embodiments of this application, the SMF network element includes a unit or module for performing each step in the method. For each step in the method performed by the UPF network element, the UPF network element includes a unit or module for performing each step in the method. For each step in the method performed by the terminal device, the terminal device includes a unit or a module for performing each step in the method. For example, a module that controls or processes an action of the communication apparatus may be referred to as a processing module. A module that performs the step of processing a message or data on the communication apparatus side may be referred to as a communication module.

FIG. 6 is a schematic diagram of a hardware structure of a communication device according to an embodiment of this application. For hardware structures of the SMF network element and the UPF network element in embodiments of this application, refer to the schematic diagram of the hardware structure of the communication device shown in FIG. 6. The communication device includes a processor 41, a communication line 44, and at least one communication interface (a communication interface 43 is used as an example in FIG. 6).

The processor 41 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 44 may include a path for transferring information between the foregoing components.

The communication interface 43 is any apparatus such as a transceiver, and is configured to communicate with another device or a communication network such as an ethernet, a radio access network (radio access network, RAN), or a wireless local area network (wireless local area network, WLAN).

Possibly, the communication device may further include a memory 42.

The memory 42 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the memory 42 is not limited thereto. The memory may exist independently, and is connected to the processor through the communication line 44. Alternatively, the memory may be integrated with the processor.

The memory 42 is configured to store computer-executable instructions for performing the solutions of this application, and the processor 41 controls execution of the computer-executable instructions. The processor 41 is configured to execute the computer-executable instructions stored in the memory 42, to implement a policy control method provided in the following embodiments of this application.

Possibly, the computer-execution instructions in embodiments of this application may also be referred to as application program code. This is not specifically limited in embodiments of this application.

During specific implementation, in an embodiment, the processor 41 may include one or more CPUs, such as a CPU 0 and a CPU 1 in FIG. 6.

During specific implementation, in an embodiment, the communication device may include a plurality of processors, such as the processor 41 and a processor 45 in FIG. 6. Each of these processors may be a single-core (single-CPU) processor, or may be a multi-core (multi-CPU) processor. The processor herein may be one or more devices, circuits, and/or processing cores configured to process data (for example, computer program instructions).

For example, the communication apparatus is an SMF network element or a chip used in the SMF network element. The communication interface is configured to support the communication apparatus in performing S401, S403, S404, and S405 in the foregoing embodiment. The processor 41 or the processor 45 is configured to support the communication apparatus in performing S402 in the foregoing embodiment.

In another example, the communication apparatus may be a UPF network element or a chip or a chip system used in the UPF network element. The communication interface is configured to support the communication apparatus in performing S403 and S404 in the foregoing embodiment. The processor 41 or the processor 45 is configured to support the communication apparatus in performing step S406 in the foregoing embodiment.

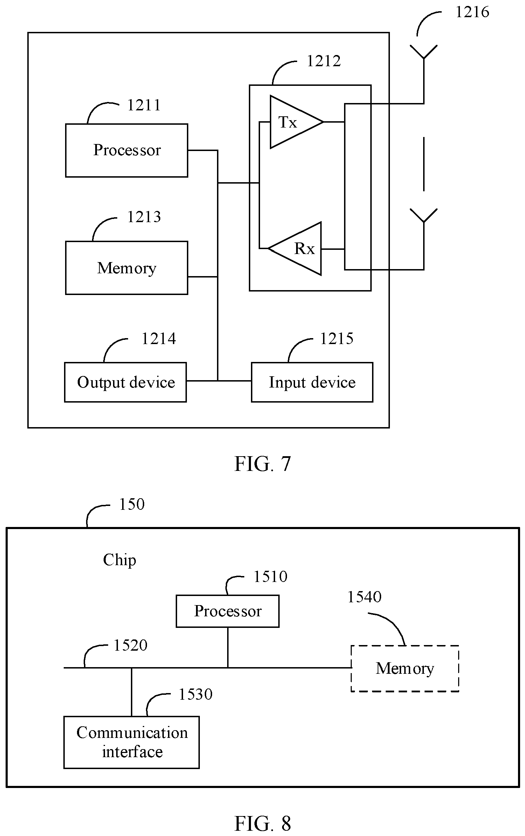

FIG. 7 is a schematic diagram of a structure of a terminal device (briefly referred to as a terminal below) according to an embodiment of this application.

The terminal includes at least one processor 1211 and at least one transceiver 1212. In a possible example, the terminal may further include at least one memory 1213, an output device 1214, an input device 1215, and one or more antennas 1216. The processor 1211, the memory 1213, and the transceiver 1212 are connected to each other. The antenna 1216 is connected to the transceiver 1212, and the output device 1214 and the input device 1215 are connected to the processor 1211.

A memory in this embodiment of this application, for example, the memory 1213, may include at least one of the following types: a read-only memory (read-only memory, ROM) or another type of static storage device that can store static information and instructions, a random access memory (random access memory, RAM) or another type of dynamic storage device that can store information and instructions, or an electrically erasable programmable read-only memory (Electrically erasable programmable-only memory, EEPROM). In some scenarios, the memory may alternatively be a compact disc read-only memory (compact disc read-only memory, CD-ROM) or another compact disc storage medium, an optical disc storage medium (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, the memory is not limited thereto.

The memory 1213 may exist independently, and is connected to the processor 1211. In another example, the memory 1213 may be integrated with the processor 1211, for example, be integrated into a chip. The memory 1213 can store program code for executing the technical solution in this embodiment of this application, and the processor 1211 controls execution of the program code. Various types of executed computer program code may also be considered as drivers of the processor 1211. For example, the processor 1211 is configured to execute the computer program code stored in the memory 1213, to implement the technical solution in this embodiment of this application.

The transceiver 1212 may be configured to support receiving or sending of a radio frequency signal between terminals or between a terminal and an access device, and the transceiver 1212 may be connected to the antenna 1216. The transceiver 1212 includes a transmitter Tx and a receiver Rx. Specifically, the one or more antennas 1216 may receive a radio frequency signal. The receiver Rx of the transceiver 1212 is configured to: receive the radio frequency signal from the antenna, convert the radio frequency signal into a digital baseband signal or a digital intermediate frequency signal, and provide the digital baseband signal or the digital intermediate frequency signal for the processor 1211, so that the processor 1211 further processes the digital baseband signal or the digital intermediate frequency signal, for example, performs demodulation processing and decoding processing. In addition, the transmitter Tx of the transceiver 1212 is further configured to: receive a modulated digital baseband signal or a modulated digital intermediate frequency signal from the processor 1211, convert the modulated digital baseband signal or the digital intermediate frequency signal into a radio frequency signal, and send the radio frequency signal through the one or more antennas 1216. Specifically, the receiver Rx may selectively perform one-level or multi-level down-conversion mixing and analog-to-digital conversion on the radio frequency signal, to obtain the digital baseband signal or the digital intermediate frequency signal. A sequence of the down-conversion mixing and the analog-to-digital conversion may be adjusted. The transmitter Tx may selectively perform one-level or multi-level up-conversion mixing and digital-to-analog conversion on the modulated digital baseband signal or the modulated digital intermediate frequency signal, to obtain the radio frequency signal. A sequence of the up-conversion mixing and the digital-to-analog conversion may be adjusted. The digital baseband signal and the digital intermediate frequency signal may be collectively referred to as digital signals.

The processor 1211 may be a baseband processor, or may be a CPU. The baseband processor and the CPU may be integrated or separated.

The processor 1211 may be configured to implement various functions for the terminal, for example, configured to process a communication protocol and communication data, or configured to: control the entire terminal device, execute a software program, and process data of the software program, or configured to assist in completing a computing processing task, for example, graphics and image processing or audio processing. Alternatively, the processor 1211 is configured to implement one or more of the foregoing functions.

The output device 1214 communicates with the processor 1211, and may display information in a plurality of manners. For example, the output device 1214 may be a liquid crystal display (Liquid Crystal Display, LCD), a light emitting diode (Light Emitting Diode, LED) display device, a cathode ray tube (Cathode Ray Tube, CRT) display device, a projector (projector), or the like. The input device 1215 communicates with the processor 1211, and may receive an input of a user in a plurality of manners. For example, the input device 1215 may be a mouse, a keyboard, a touchscreen device, or a sensor device.

Specifically, the at least one processor 1211 is configured to perform S406. The at least one transceiver 1212 is configured to perform S401 and S405.

FIG. 8 is a schematic diagram of a structure of a chip 150 according to an embodiment of the present invention. The chip 150 includes one or more (including two) processors 1510 and a communication interface 1530.

In a possible embodiment, the chip 150 shown in FIG. 8 further includes a memory 1540. The memory 1540 may include a read-only memory and a random access memory, and provide operation instructions and data to the processor 1510. A part of the memory 1540 may further include a non-volatile random access memory (non-volatile random access memory, NVRAM).

In some implementations, the memory 1540 stores the following elements: an executable module or a data structure, or a subset thereof, or an extended set thereof.

In this embodiment of the present invention, a corresponding operation is performed by invoking the operation instruction stored in the memory 1540 (where the operation instruction may be stored in an operating system).

In a possible implementation, a structure of a chip used by the SMF network element, a structure of a chip used by the UPF network element, or a structure of a chip used by the terminal device is similar, and different apparatuses may use different chips to implement respective functions.

The processor 1510 controls an operation of the SMF network element, the UPF network element, or the terminal device, and the processor 1510 may also be referred to as a central processing unit (central processing unit, CPU). The memory 1540 may include a read-only memory and a random access memory, and provide instructions and data for the processor 1510. A part of the memory 1540 may further include a non-volatile random access memory (non-volatile random access memory, NVRAM). For example, in an application, the memory 1540, the communication interface 1530, and the memory 1540 are coupled together by using a bus system 1520. The bus system 1520 may further include a power bus, a control bus, a status signal bus, and the like in addition to a data bus. However, for clarity of description, various buses are marked as the bus system 1520 in FIG. 8.

The foregoing communication unit may be an interface circuit or a communication interface of the apparatus, and is configured to receive a signal from another apparatus. For example, when the apparatus is implemented as a chip, the communication unit is an interface circuit or a communication interface that is of the chip and that is configured to receive a signal from another chip or apparatus or send a signal.

The method disclosed in the foregoing embodiment of the present invention may be applied to the processor 1510, or implemented by the processor 1510. The processor 1510 may be an integrated circuit chip, and has a signal processing capability. In an implementation process, the steps in the foregoing method may be implemented through a hardware integrated logical circuit in the processor 1510, or by using instructions in a form of software. The processor 1510 may be a general-purpose processor, a digital signal processor (digital signal processing, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. It may implement or perform the methods, the steps, and logical block diagrams that are disclosed in embodiments of the present invention. The general-purpose processor may be a microprocessor, or the processor may be any conventional processor or the like. Steps of the methods disclosed with reference to embodiments of the present invention may be directly executed and accomplished by means of a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1540, and the processor 1510 reads information in the memory 1540 and completes the steps in the foregoing methods in combination with hardware of the processor 1510.

In a possible implementation, the communication interface 1530 is configured to perform receiving and sending steps of the SMF network element, the UPF network element, or the terminal device in the embodiment shown in FIG. 4. The processor 1510 is configured to perform processing steps of the SMF network element, the UPF network element, or the terminal device in the embodiment shown in FIG. 4.

In the foregoing embodiment, the instructions stored in the memory that are to be executed by the processor may be implemented in a form of a computer program product. The computer program product may be written into the memory in advance, or may be downloaded and installed in the memory in a software form.

The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

An embodiment of this application further provides a computer-readable storage medium. The methods described in the foregoing embodiments may be all or partially implemented by using software, hardware, firmware, or any combination thereof. If the methods are implemented in the software, functions used as one or more instructions or code may be stored in the computer-readable medium or transmitted on the computer-readable medium. The computer-readable medium may include a computer storage medium and a communication medium, and may further include any medium that can transfer a computer program from one place to another. The storage medium may be any target medium that can be accessed by a computer.

In a possible design, the computer-readable medium may include a RAM, a ROM, an EEPROM, a CD-ROM, or another optical disc storage, a magnetic disk storage or another magnetic storage device, or the computer-readable medium is used to carry required program code that is stored in a form of instructions or a data structure, and the computer-readable medium may be accessed by the computer. In addition, any connection is appropriately referred to as a computer-readable medium. For example, if a coaxial cable, an optical fiber cable, a twisted pair, a digital subscriber line (DSL), or wireless technologies (such as infrared, radio, and microwave) are used to transmit software from a website, a server, or another remote source, the coaxial cable, the optical fiber cable, the twisted pair, the DSL, or the wireless technologies such as infrared, radio, and microwave are included in a definition of the medium. Magnetic disks and optical discs used in this specification include a compact disk (CD), a laser disk, an optical disc, a digital versatile disc (DVD), a floppy disk, and a Blu-ray disc. The magnetic disks usually magnetically reproduce data, and the optical discs optically reproduce data by using laser light. The foregoing combinations should also be included within the scope of the computer-readable medium.

An embodiment of this application further provides a computer program product. The methods described in the foregoing embodiments may be all or partially implemented by using software, hardware, firmware, or any combination thereof. When the methods are implemented in the software, the methods may be all or partially implemented in a form of the computer program product. The computer program product includes one or more computer instructions. When the foregoing computer program instructions are loaded and executed on a computer, the procedures or functions described in the foregoing method embodiments are all or partially generated. The computer may be a general-purpose computer, a dedicated computer, a computer network, a base station, a terminal, or another programmable apparatus.

The objectives, technical solutions, and benefits of the present invention are further described in detail in the foregoing specific embodiments. It should be understood that the foregoing descriptions are merely specific embodiments of the present invention, but are not intended to limit the protection scope of the present invention. Any modification, equivalent replacement, or improvement made within the spirit and principle of the present invention shall fall within the protection scope of the present invention.

It should be noted that the network elements in embodiments of this application may also use other definitions or names in specific application. For example, the SMF network element may be referred to as a first core network element, the UPF network element may be referred to as a second core network element, the PCF network element may be referred to as a third core network element, the AMF network element may be referred to as a fourth core network element. Alternatively, the foregoing network elements may also be collectively referred to as core network elements. Alternatively, other names may be defined for the foregoing network elements based on actual functions. This is not specifically limited in embodiments of this application.

## Claims

1. A communication method, comprising:
receiving, by a session management function SMF network element, a first message from a terminal device, wherein the first message is used to request to establish or update a protocol data unit PDU session;
determining, by the SMF network element, that a plurality of traffic flows in the PDU session share a same connection, wherein the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection; and
sending, by the SMF network element, a second message to the terminal device, wherein the second message is used to indicate that the PDU session is successfully established or updated, the second message comprises a multi-flow connection parameter, and the multi-flow connection parameter is used to indicate that the plurality of traffic flows in the PDU session are transmitted by using the same connection.

2. The method according to claim 1, wherein the multi-flow connection parameter comprises a traffic flow description parameter and a multi-flow multiplexing parameter, and the multi-flow multiplexing parameter is used to indicate QUIC information, QUIC aggregated stream connection information, MP-QUIC information, MP-QUIC aggregated stream connection information, or SCTP connection information that is related to a traffic flow.

3. The method according to claim 2, wherein the traffic flow description parameter comprises at least one of the following:
one or more pieces of traffic flow description information, an application identifier, one or more quality of service QoS flow identifiers, or a PDU session identifier.

4. The method according to claim 2 or 3, wherein the multi-flow multiplexing parameter comprises at least one of the following: QUIC method indication information or MP-QUIC method indication information or SCTP method indication information, a connection identifier, multi-flow multiplexing indication information, QoS flow granularity indication information, or PDU session granularity indication information, wherein
the QUIC method indication information is used to indicate that the traffic flow is transmitted by using the QUIC, the MP-QUIC method indication information is used to indicate that the traffic flow is transmitted by using the MP-QUIC, the SCTP method indication information is used to indicate that the traffic flow is transmitted by using the SCTP connection, the connection identifier is used to indicate a connection identifier corresponding to a traffic flow, the QoS flow granularity indication information is used to indicate that the QUIC, the MP-QUIC, or the SCTP connection is allowed to be shared by a traffic flow in one or more QoS flows, and the PDU session granularity indication information is used to indicate that the QUIC, the MP-QUIC, or the SCTP connection is allowed to be shared by a traffic flow in the PDU session.

5. The method according to any one of claims 1 to 4, wherein the determining, by the SMF network element, that a plurality of traffic flows in the PDU session share a same connection comprises:
determining, by the SMF network element based on one or more of the following: traffic flow security or encryption information, a traffic flow QoS parameter, a traffic flow destination address, a traffic flow data network name DNN, a traffic flow transmission protocol, a traffic flow type, and a traffic flow offloading mode, that the traffic flows share the same connection; or
determining, by the SMF network element based on PCF indication information from a policy control function PCF network element or indication information from the UPF network element, that the traffic flows share the same connection.

6. The method according to any one of claims 1 to 5, further comprising: sending, by the SMF network element, the multi-flow connection parameter to the user plane function UPF network element.

7. The method according to any one of claims 1 to 6, wherein the determining, by the SMF network element, that a plurality of traffic flows in the PDU session share a same connection comprises:
when the plurality of traffic flows in the PDU session have a same encryption and/or integrity protection requirement, determining, by the SMF network element, that the plurality of traffic flows share the same connection;
when the plurality of traffic flows in the PDU session have a same encryption security level, determining, by the SMF network element, that the plurality of traffic flows share the same connection;
when the plurality of traffic flows in the PDU session belong to a same QoS flow, determining, by the SMF network element, that the plurality of traffic flows share the same connection;
when the plurality of traffic flows in the PDU session are non-guaranteed bit rate non-GBR traffic flows, determining, by the SMF network element, that the plurality of traffic flows share the same connection; or
when the plurality of traffic flows in the PDU session have a same destination IP address or a same DNN, or the plurality of traffic flows in the PDU session use a same transmission protocol, or the plurality of traffic flows in the PDU session belong to the same PDU session, or the plurality of traffic flows in the PDU session use a same offloading mode, or the plurality of traffic flows in the PDU session have a same type, determining, by the SMF network element, that the plurality of traffic flows share the same connection.

8. The method according to any one of claims 1 to 7, further comprising:
sending, by the SMF network element, encryption and/or integrity protection indication information to the UPF network element and/or the terminal device.

9. A communication method, comprising:
sending, by a terminal device, a first message to a session management function SMF network element, wherein the first message is used to request to establish or update a protocol data unit PDU session; and
receiving, by the terminal device, a second message from the SMF network element, wherein the second message is used to indicate that the PDU session is successfully established or updated, the second message comprises a multi-flow connection parameter, and the multi-flow connection parameter is used to indicate that a plurality of traffic flows in the PDU session are transmitted by using a same connection; and the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection.

10. The method according to claim 9, wherein the multi-flow connection parameter comprises a traffic flow description parameter and a multi-flow multiplexing parameter, and the multi-flow multiplexing parameter is used to indicate QUIC information, QUIC aggregated stream connection information, MP-QUIC information, MP-QUIC aggregated stream connection information, or SCTP connection information that is related to a traffic flow.

11. The method according to claim 10, wherein the traffic flow description parameter comprises at least one of the following:
one or more pieces of traffic flow description information, an application identifier, one or more QoS flow identifiers, or a PDU session identifier.

12. The method according to claim 10 or 11, wherein the multi-flow multiplexing parameter comprises at least one of the following: QUIC method indication information or MP-QUIC method indication information or SCTP method indication information, a connection identifier, multi-flow multiplexing indication information, QoS flow granularity indication information, or PDU session granularity indication information, wherein
the QUIC method indication information is used to indicate that the traffic flow is transmitted by using the QUIC, the MP-QUIC method indication information is used to indicate that the traffic flow is transmitted by using the MP-QUIC, the SCTP method indication information is used to indicate that the traffic flow is transmitted by using the SCTP connection, the connection identifier is used to indicate a connection identifier corresponding to a traffic flow, the QoS flow granularity indication information is used to indicate that the QUIC, the MP-QUIC, or the SCTP connection is allowed to be shared by a traffic flow in one or more QoS flows, and the PDU session granularity indication information is used to indicate that the QUIC, the MP-QUIC, or the SCTP connection is allowed to be shared by a traffic flow in the PDU session.

13. The method according to claim 12, further comprising:
establishing, by the terminal device, the connection shared by a plurality of traffic flows of a user plane function UPF network element; and
transmitting, by the terminal device, a first traffic flow by using the connection shared by the plurality of traffic flows.

14. The method according to claim 13, further comprising:
determining, by the terminal device based on the multi-flow multiplexing parameter, whether a second traffic flow is allowed to share the connection for transmitting the first traffic flow; and
when the second traffic flow is allowed to share the connection for transmitting the first traffic flow, transmitting, by the terminal device, the second traffic flow by using the connection for transmitting the first traffic flow.

15. The method according to any one of claims 9 to 14, further comprising:
receiving, by the terminal device, encryption and/or integrity protection indication information from the SMF network element; and
performing, by the terminal device, encryption and/or integrity protection on the traffic flow or skipping performing encryption and/or integrity protection on the traffic flow based on the encryption and/or integrity protection indication information.

16. A communication apparatus, comprising a processing unit and a communication unit, wherein
the communication unit is configured to receive a first message from a terminal device, wherein the first message is used to request to establish or update a protocol data unit PDU session;
the processing unit is configured to determine that a plurality of traffic flows in the PDU session share a same connection, wherein the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection; and
the communication unit is further configured to send a second message to the terminal device, wherein the second message is used to indicate that the PDU session is successfully established or updated, the second message comprises a multi-flow connection parameter, and the multi-flow connection parameter is used to indicate that the plurality of traffic flows in the PDU session are transmitted by using the same connection.

17. The apparatus according to claim 16, wherein the multi-flow connection parameter comprises a traffic flow description parameter and a multi-flow multiplexing parameter, and the multi-flow multiplexing parameter is used to indicate QUIC information, QUIC aggregated stream connection information, MP-QUIC information, MP-QUIC aggregated stream connection information, or SCTP connection information that is related to a traffic flow.

18. The apparatus according to claim 17, wherein the traffic flow description parameter comprises at least one of the following:
one or more pieces of traffic flow description information, an application identifier, one or more quality of service QoS flow identifiers, or a PDU session identifier.

19. The apparatus according to claim 17 or 18, wherein the multi-flow multiplexing parameter comprises at least one of the following: QUIC method indication information or MP-QUIC method indication information or SCTP method indication information, a connection identifier, multi-flow multiplexing indication information, QoS flow granularity indication information, or PDU session granularity indication information, wherein
the QUIC method indication information is used to indicate that the traffic flow is transmitted by using the QUIC, the MP-QUIC method indication information is used to indicate that the traffic flow is transmitted by using the MP-QUIC, the SCTP method indication information is used to indicate that the traffic flow is transmitted by using the SCTP connection, the connection identifier is used to indicate a connection identifier corresponding to a traffic flow, the QoS flow granularity indication information is used to indicate that the QUIC, the MP-QUIC, or the SCTP connection is allowed to be shared by a traffic flow in one or more QoS flows, and the PDU session granularity indication information is used to indicate that the QUIC, the MP-QUIC, or the SCTP connection is allowed to be shared by a traffic flow in the PDU session.

20. The apparatus according to any one of claims 16 to 19, wherein the processing unit is specifically configured to determine, based on one or more of the following: traffic flow security or encryption information, a traffic flow QoS parameter, a traffic flow destination address, a traffic flow data network name DNN, a traffic flow transmission protocol, a traffic flow type, and a traffic flow offloading mode, that the traffic flows share the same connection; or
the processing unit is specifically configured to determine, based on PCF indication information from a policy control function PCF network element or indication information from the UPF network element, that the traffic flows share the same connection.

21. The apparatus according to any one of claims 16 to 20, wherein the communication unit is further configured to send the multi-flow connection parameter to the user plane function UPF network element.

22. The apparatus according to any one of claims 16 to 21, wherein the processing unit is specifically configured to:
when the plurality of traffic flows in the PDU session have a same encryption and/or integrity protection requirement, determine that the plurality of traffic flows share the same connection;
when the plurality of traffic flows in the PDU session have a same encryption security level, determine that the plurality of traffic flows share the same connection;
when the plurality of traffic flows in the PDU session belong to a same QoS flow, determine that the plurality of traffic flows share the same connection;
when the plurality of traffic flows in the PDU session are non-guaranteed bit rate non-GBR traffic flows, determine that the plurality of traffic flows share the same connection; or
when the plurality of traffic flows in the PDU session have a same destination IP address or a same DNN, or the plurality of traffic flows in the PDU session use a same transmission protocol, or the plurality of traffic flows in the PDU session belong to the same PDU session, or the plurality of traffic flows in the PDU session use a same offloading mode, or the plurality of traffic flows in the PDU session have a same type, determine that the plurality of traffic flows share the same connection.

23. The apparatus according to any one of claims 16 to 22, wherein the communication unit is further configured to send encryption and/or integrity protection indication information to the UPF network element and/or the terminal device.

24. A communication apparatus, comprising a communication unit, wherein
the communication unit is configured to send a first message to a session management function SMF network element, wherein the first message is used to request to establish or update a protocol data unit PDU session; and
the communication unit is further configured to receive a second message from the SMF network element, wherein the second message is used to indicate that the PDU session is successfully established or updated, the second message comprises a multi-flow connection parameter, and the multi-flow connection parameter is used to indicate that a plurality of traffic flows in the PDU session are transmitted by using a same connection; and the connection shared by the plurality of traffic flows is an internet transport layer protocol QUIC, an aggregated stream connection in a QUIC, a multi-path internet transmission protocol MP-QUIC, an aggregated stream connection in an MP-QUIC, or a stream control transmission protocol SCTP connection.

25. The apparatus according to claim 24, wherein the multi-flow connection parameter comprises a traffic flow description parameter and a multi-flow multiplexing parameter, and the multi-flow multiplexing parameter is used to indicate QUIC information, QUIC aggregated stream connection information, MP-QUIC information, MP-QUIC aggregated stream connection information, or SCTP connection information that is related to a traffic flow.

26. The apparatus according to claim 25, wherein the traffic flow description parameter comprises at least one of the following:
one or more pieces of traffic flow description information, an application identifier, one or more QoS flow identifiers, or a PDU session identifier.

27. The apparatus according to claim 25 or 26, wherein the multi-flow multiplexing parameter comprises at least one of the following: QUIC method indication information or MP-QUIC method indication information or SCTP method indication information, a connection identifier, multi-flow multiplexing indication information, QoS flow granularity indication information, or PDU session granularity indication information, wherein
the QUIC method indication information is used to indicate that the traffic flow is transmitted by using the QUIC, the MP-QUIC method indication information is used to indicate that the traffic flow is transmitted by using the MP-QUIC, the SCTP method indication information is used to indicate that the traffic flow is transmitted by using the SCTP connection, the connection identifier is used to indicate a connection identifier corresponding to a traffic flow, the QoS flow granularity indication information is used to indicate that the QUIC, the MP-QUIC, or the SCTP connection is allowed to be shared by a traffic flow in one or more QoS flows, and the PDU session granularity indication information is used to indicate that the QUIC, the MP-QUIC, or the SCTP connection is allowed to be shared by a traffic flow in the PDU session.

28. The apparatus according to claim 27, further comprising a processing unit, wherein
the processing unit is configured to establish the connection shared by a plurality of traffic flows of a user plane function UPF network element; and
the processing unit is further configured to transmit a first traffic flow by using the connection shared by the plurality of traffic flows.

29. The apparatus according to claim 28, wherein the processing unit is further configured to determine, based on the multi-flow multiplexing parameter, whether a second traffic flow is allowed to share the connection for transmitting the first traffic flow; and
the processing unit is further configured to: when the second traffic flow is allowed to share the connection for transmitting the first traffic flow, transmit the second traffic flow by using the connection for transmitting the first traffic flow.

30. The apparatus according to any one of claims 24 to 29, further comprising:
the communication unit is further configured to receive encryption and/or integrity protection indication information from the SMF network element; and
the processing unit is further configured to perform encryption and/or integrity protection on the traffic flow or skip performing encryption and/or integrity protection on the traffic flow based on the encryption and/or integrity protection indication information.

31. A communication apparatus, comprising a processor and a communication interface, wherein
the communication interface is configured to perform an operation of sending or receiving a message in an SMF network element in the communication method according to any one of claims 1 to 8, or perform an operation of sending or receiving a message in a terminal device in the communication method according to any one of claims 9 to 15, and the processor runs instructions to perform a processing or control operation in the SMF network element in the communication method according to any one of claims 1 to 8, or perform a processing or control operation in the terminal device in the communication method according to any one of claims 9 to 15.

32. A chip, wherein the chip comprises at least one processor and a communication interface, the communication interface is coupled to the at least one processor, the at least one processor is configured to run a computer program or instructions, to implement the communication method according to any one of claims 1 to 8, or implement the communication method according to any one of claims 9 to 15, and the communication interface is configured to communicate with a module other than the chip.

33. A computer-readable storage medium, wherein the computer-readable storage medium stores instructions; and when the instructions are run, the communication method according to any one of claims 1 to 8 or the communication method according to any one of claims 9 to 15 is implemented.

34. A communication system, comprising a session management function network element and an access and mobility management function network element configured to communicate with the session management function network element, wherein the session management function network element is configured to perform the communication method according to any one of claims 1 to 8.
